(19) **Europäisches Patentamt**
**European Patent Office**
**Office européen des brevets**

(11) **EP 2 841 877 B1**

(12) **FASCICULE DE BREVET EUROPEEN**

(45) Date de publication et mention
de la délivrance du brevet:
**29.06.2016 Bulletin 2016/26**

(51) Int Cl.:
***G01C 19/72*** *(2006.01)*

(21) Numéro de dépôt: **13723874.7**

(86) Numéro de dépôt international:
**PCT/FR2013/050924**

(22) Date de dépôt: **25.04.2013**

(87) Numéro de publication internationale:
**WO 2013/160622 (31.10.2013 Gazette 2013/44)**

(54) **DISPOSITIF DE MESURE À FIBRE OPTIQUE, GYROMÈTRE, CENTRALE DE NAVIGATION ET DE STABILISATION INERTIELLE**

FASEROPTISCHE MESSVORRICHTUNG, WENDEKREISEL SOWIE TRÄGHEITSSTABILISIERUNGS- UND NAVIGATIONSEINHEIT

FIBRE-OPTIC MEASUREMENT DEVICE, RATE GYRO, AND INERTIAL STABILISATION AND NAVIGATION UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2012 FR 1253925**

(43) Date de publication de la demande:
**04.03.2015 Bulletin 2015/10**

(73) Titulaire: **IXBLUE**
**78100 Saint-Germain-en-Laye (FR)**

(72) Inventeurs:
• **LEFEVRE, Hervé**
**F-75007 Paris (FR)**
• **GUATTARI, Frédéric**
**F-93300 Aubervilliers (FR)**
• **MOLUCON, Cédric**
**F-75007 Paris (FR)**
• **DUCLOUX, Eric**
**F-92500 Rueil Malmaison (FR)**
• **FERRAND, Sébastien**
**F-75017 Paris (FR)**

(74) Mandataire: **Coralis Harle**
**14-16 Rue Ballu**
**75009 Paris (FR)**

(56) Documents cités:
**EP-A1- 0 430 747     WO-A1-2012/008955**

EP 2 841 877 B1

## Description

L'invention concerne un dispositif de mesure à fibre optique permettant de mesurer la variation d'un paramètre qui produit des perturbations non réciproques dans un interféromètre en anneau de SAGNAC.

L'interféromètre de SAGNAC et les phénomènes physiques qu'il met en jeu sont bien connus. On pourra par exemple consulter sur ce sujet l'ouvrage « *The Fiber-Optic Gyroscope »* de H. Lefèvre (Artech House, 1993).

Dans un tel interféromètre, une lame séparatrice ou tout autre dispositif séparateur divise une onde incidente en entrée de l'interféromètre en deux ondes. Les deux ondes ainsi créées sont dites contra-propagatives. Elles se propagent en effet en sens opposé le long d'un même chemin optique fermé, puis se recombinent en produisant des interférences. L'état d'interférence entre les deux ondes contra-propagatives dépend alors de la différence de phase relative entre elles. La puissance lumineuse P mesurée en sortie d'un interféromètre de SAGNAC est de la forme : $P (\Delta\phi) = P_0 [1 + \cos (\Delta\phi)]$ où $\Delta\phi$ est la différence de phase relative entre les deux ondes contra-propagatives. Ainsi, la puissance mesurée en sortie de l'interféromètre prend des valeurs entre un minimum (on parle alors de frange sombre) et un maximum (frange brillante) en fonction de la valeur de la différence de phase $\Delta\phi$.

Il est connu que certains phénomènes physiques sont susceptibles d'introduire des déphasages, dits non réciproques, sur les ondes contra-propagatives, engendrant ainsi une différence de phase $\Delta\phi_p$ entre ces ondes et modifiant l'état d'interférence lors de leur recombinaison. Ainsi, la mesure de cette différence de phase $\Delta\phi_p$ non réciproque permet de quantifier le phénomène qui l'a engendré.

Le principal phénomène physique susceptible de créer des perturbations non réciproques est l'effet SAGNAC produit par la rotation de l'interféromètre autour d'un axe perpendiculaire au plan de son chemin optique fermé. Un second effet, l'effet FARADAY -ou effet magnéto-optique colinéaire-, est également connu comme produisant des effets non réciproques de ce type.

Il est connu qu'un interféromètre de SAGNAC peut comporter une bobine de fibre optique, de préférence monomode, et à conservation de polarisation. Les multiples tours d'une fibre optique forment un chemin optique fermé de très grande longueur, jusqu'à plusieurs kilomètres.

On définit communément une fréquence propre $f_p$ de l'interféromètre de SAGNAC. La fréquence propre $f_p$ d'un interféromètre en anneau de SAGNAC comportant une bobine de fibre optique monomode (fibre de silice d'indice de réfraction proche de 1.5 dans la gamme de longueur d'onde de fonctionnement) de 1 kilomètre de longueur est de l'ordre de 100 kilohertz (kHz). L'allongement de la longueur de bobine et donc du chemin optique a pour avantage de conférer une plus grande sensibilité à l'interféromètre.

Comme expliqué précédemment, le signal mesuré en sortie de l'interféromètre est une fonction cosinusoïdale de la différence de phase $\Delta\phi$ entre les deux ondes contra-propagatives, si bien que la sensibilité de la réponse $P(\Delta\phi)$ de l'interféromètre au voisinage de la différence de phase nulle ($\Delta\phi = 0$) est faible.

Il est connu qu'il est possible de déplacer le point de fonctionnement de l'interféromètre vers un point offrant une plus grande sensibilité. Il a notamment été proposé d'introduire une modulation de déphasage supplémentaire, dite de mise au biais, au moyen d'un modulateur de phase placé dans l'interféromètre en anneau de SAGNAC.

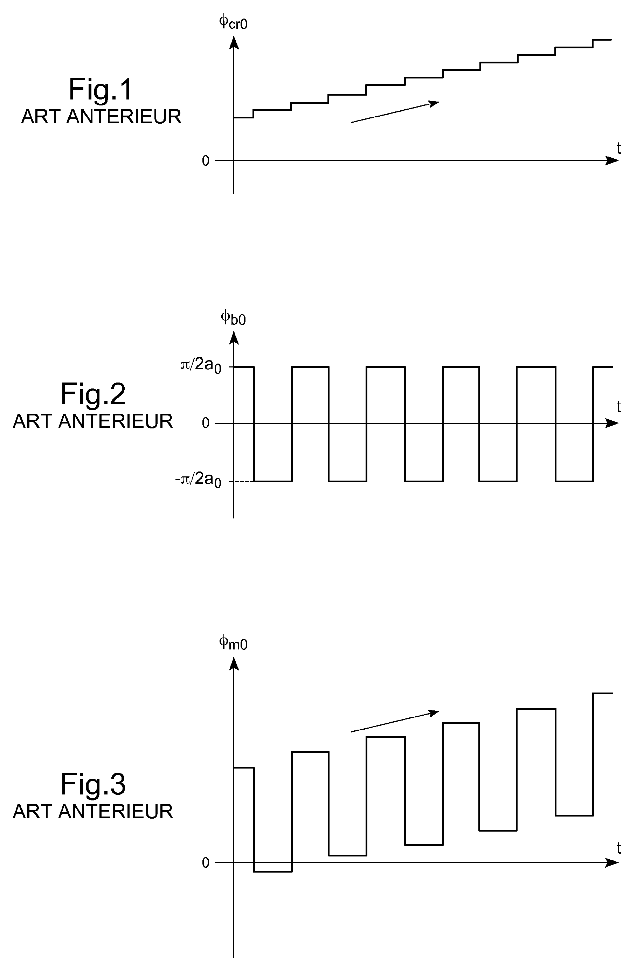

Une solution simple à mettre en oeuvre pour réaliser cette mise au biais est représentée sur la figure 2. Elle consiste en une modulation périodique $\phi_{b0}$, carrée, en créneaux à une fréquence de modulation de mise au biais $f_b$, présentant des niveaux $+\pi/2a_0$ et $-\pi/2a_0$ ($a_0$ étant un nombre réel non nul). Cette modulation de déphasage de mise au biais $\phi_{b0}$ introduit entre les deux ondes contra-propagatives une modulation de différence de phase de mise au biais $\Delta\phi_{b0}$. qui est également en créneaux à une fréquence de modulation de mise au biais $f_b$, avec des niveaux $+\pi/a_0$ et $-\pi/a_0$.

En choisissant par exemple $a_0 = 2$, la réponse fournie par l'interféromètre de SAGNAC peut être exploitée avec une très grande sensibilité.

Il est également connu que la précision de la mesure est améliorée par l'utilisation d'une méthode, dite d'annulation de phase, également appelée fonctionnement en boucle fermée, au lieu d'un fonctionnement en simple boucle ouverte.

Selon cette méthode, un déphasage supplémentaire $\phi_{cr0}$, dit de contre-réaction, est généré au moyen du modulateur de phase entre les deux ondes contra-propagatives. Ce déphasage supplémentaire introduit alors entre les deux ondes contra-propagatives une différence de phase de contre-réaction $\Delta\phi_{cr0}$.

Cette différence de phase supplémentaire $\Delta\phi_{cr0}$ compense alors la différence de phase $\Delta\phi_p$ produite par le paramètre mesuré. La somme des deux différences de phase $\Delta\phi_p$ et $\Delta\phi_{cr}$, peut donc être maintenue nulle, ce qui permet de faire fonctionner l'interféromètre avec une meilleure précision.

La mesure du paramètre à mesurer est réalisée par l'exploitation du signal nécessaire à la production du déphasage de contre-réaction $\phi_{cr0}$.

La méthode d'annulation de phase peut être mise en oeuvre grâce à une technique de modulation serrodyne dans laquelle le déphasage de contre-réaction $\phi_{cr0}$ est une modulation en marches d'escalier, comme cela est représenté sur la figure 1.

Chaque marche a ici une largeur (ou une durée) $\Delta\tau_g = 1/2f_p$. De plus, la hauteur de chaque marche est telle que la modulation de différence de phase $\Delta\phi_{cr0}$ introduite entre les deux ondes contra-propagatives compense à chaque instant la différence de phase $\Delta\phi_p$ due

au paramètre mesuré. En fonction de la valeur, positive ou négative, de cette différence de phase $\Delta\phi_p$, la modulation de déphasage de contre-réaction $\phi_{cr0}$ est soit une rampe montante (cas de la figure 1), soit une rampe descendante.

En combinant les deux méthodes précédemment exposées, c'est-à-dire, d'une part la méthode de mise au biais, et, d'autre part, la méthode d'annulation de phase, on obtient alors une modulation de déphasage $\phi_{m0}$ qui est la somme de la modulation de déphasage de mise au biais $\phi_{b0}$ et de la modulation de déphasage de contre-réaction $\phi_{cr0}$. Le résultat obtenu est représenté sur la figure 3 où l'on constate que la modulation de déphasage $\phi_{m0}$ est une modulation en créneaux montante.

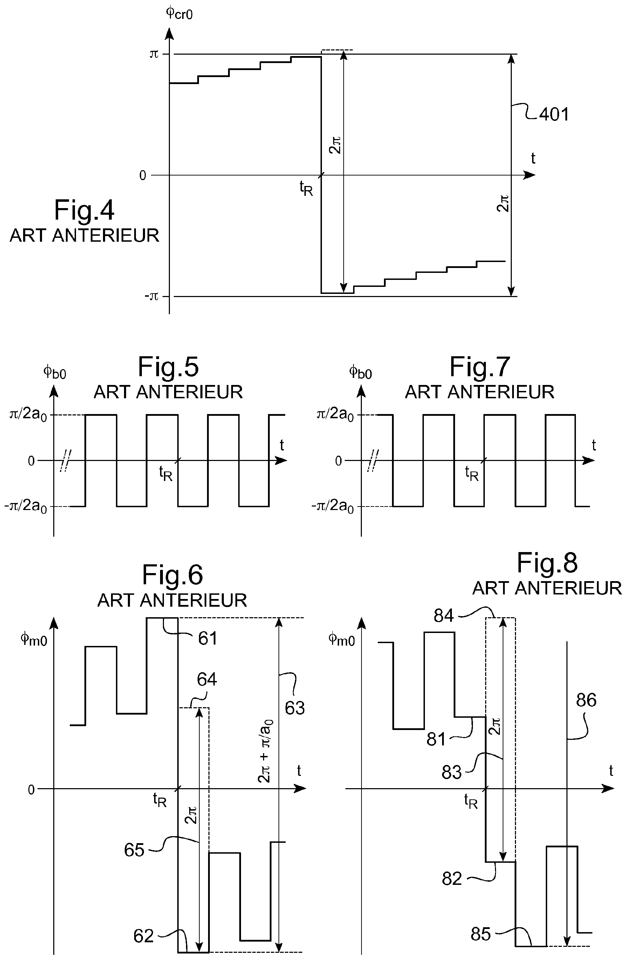

Par ailleurs, il est connu de faire retomber la modulation de déphasage de contre-réaction $\phi_{cr0}$. Pour limiter les erreurs de mesure, cette retombée a pour amplitude $2\pi$ comme cela est représenté sur la figure 4. La retombée intervient lorsqu'une marche de la rampe est telle que son niveau dépasse $\pi$, ici à l'instant $t = t_R$.

Cette retombée à $2\pi$ est rendu nécessaire par le fait que la valeur de la tension appliquée sur le modulateur de phase pour produire le déphasage de contre-réaction $\phi_{cr0}$ ne peut pas croître indéfiniment.

Ainsi générée, la modulation de déphasage de contre-réaction $\phi_{cr0}$ a une amplitude maximale 401 inférieure à $2\pi$.

La retombée à $2\pi$ de la modulation de déphasage de contre-réaction $\phi_{cr0}$ intervenant à l'instant $t = t_R$, il s'ensuit que la modulation de déphasage $\phi_{m0}$ présente deux profils différents selon que cette retombée intervient lors du passage d'un niveau haut à un niveau bas, ou lors du passage d'un niveau bas à un niveau haut de la modulation de déphasage de mise au biais $\phi_{b0}$.

Ainsi, sur la figure 6, on a représenté le cas qu'on appellera par la suite cas « *mur* » dans lequel la modulation de déphasage $\phi_{m0}$ est la somme de la modulation de déphasage de contre-réaction $\phi_{cr0}$ de la figure 4 et de la modulation de déphasage de mise au biais $\phi_{b0}$ de la figure 5, celle-ci passant de son niveau haut $+\pi/2a_0$ à son niveau bas $-\pi/2a_0$ à l'instant $t = t_R$.

On remarque alors sur la figure 6 que la modulation de déphasage $\phi_{m0}$ retombe d'un premier niveau 61 vers un deuxième niveau 62 à l'instant $t = t_R$, l'amplitude 63 entre ces deux niveaux extrêmes étant sensiblement égale à $2\pi + \pi/a_0$.

En effet, sans la retombée de rampe, la modulation de déphasage $\phi_{m0}$ aurait dû passer, à l'instant $t = t_R$, du premier niveau 61 vers le niveau intermédiaire 64 représenté en pointillé. Néanmoins, avec la retombée de rampe, la modulation de déphasage $\phi_{m0}$ voit le niveau intermédiaire 64 passer vers le deuxième niveau 62, l'amplitude 65 entre ces deux niveaux 62, 64 étant égale à l'amplitude de la retombée de rampe, c'est-à-dire $2\pi$.

De la même manière, sur la figure 8, on a représenté le cas qu'on appellera par la suite cas « *escalier* » dans lequel la modulation de déphasage $\phi_{m0}$ est la somme de la modulation de déphasage de contre-

réaction $\phi_{cr0}$ de la figure 4 et de la modulation de déphasage de mise au biais $\phi_{b0}$ de la figure 7, celle-ci passant de son niveau bas $-\pi/2a_0$ à son niveau haut $+\pi/2a_0$ à l'instant $t = t_R$.

On remarque sur la figure 8 que, sans la retombée de rampe, la modulation de déphasage $\phi_{m0}$ aurait dû passer, à l'instant $t = t_R$, d'un premier niveau 81 vers un niveau haut 84 représenté en pointillé. Cependant, avec la retombée de rampe, la modulation de déphasage $\phi_{m0}$ voit le niveau haut 84 passer vers le deuxième niveau 82, l'amplitude 83 entre ces deux niveaux 82, 84 étant égale à l'amplitude de la retombée de rampe, c'est-à-dire $2\pi$.

Par la suite, lors de la transition de la modulation de déphasage de mise au biais $\phi_{b0}$ de son niveau haut vers son niveau bas, la modulation de déphasage $\phi_{m0}$ passe du deuxième niveau 82 à un niveau bas 85, situé environ $\pi/a_0$ plus bas.

Ainsi, l'amplitude totale 86 de la modulation de déphasage $\phi_{m0}$ est également sensiblement égale à $2\pi + \pi/a_0$.

Les cas « mur » et « escalier » des figures 6 et 8 sont relatifs à des modulations dites « 2 états » (*i.e.* les deux niveaux de la modulation de mise au biais).

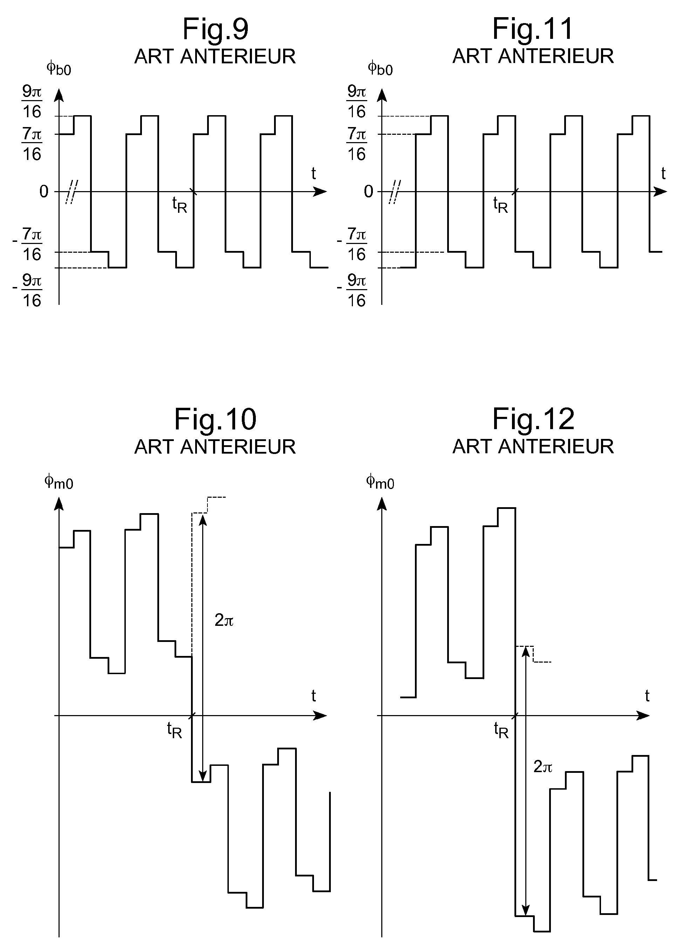

Les figures 9 à 12 sont, elles, relatives à des modulations, dites « *4 états* », telles que celles enseignées par le document EP0430747, pour lequel la modulation de déphasage de mise au biais $\phi_{b0}$ est telle qu'à chaque période de modulation, elle est égale à :

-    $\phi_1$ pendant le premier quart de période,
-    $\alpha_{\phi 1}$ pendant le deuxième quart de période,
-    $\phi_2$ pendant le troisième quart de période, et
-    $\alpha\phi_2$ pendant le quatrième quart de période.

Les valeurs de $\alpha$, de $\phi_1$ et de $\phi_2$ sont choisies de telle sorte qu'elles vérifient la relation: $\cos(\phi_1 + \phi_2) = \cos[\alpha(\phi_1 + \phi_2)]$.

Selon la proposition du document EP0430747, on a représenté sur les figures 9 et 11 deux exemples de modulation de déphasage de mise au biais $\phi_{b0}$ pour lesquelles $\alpha = 9/7$ et $\phi_1 = \phi_2 = 7\pi/16$.

La modulation de déphasage de mise au biais $\phi_{b0}$ (modulation 4 états) prend alors séquentiellement quatre valeurs différentes définissant ainsi quatre états de modulation :

-    2 états hauts pour lesquels $\phi_{b0} = \phi_1 = 7\pi/16$ et $\phi_{b0} = \alpha\phi_1 = 9\pi/16$, et
-    2 états bas pour lesquels $\phi_{b0} = -\phi_2 = -7\pi/16$ et $\phi_{b0} = -\alpha\phi_2 = -9\pi/16$.

L'amplitude de cette modulation entre les niveaux extrêmes haut et bas est donc de $18\pi/16$, soit une amplitude légèrement supérieure à $\pi$.

Ainsi, en utilisant une modulation de déphasage de mise au biais $\phi_{b0}$ telle qu'enseignée par le document EP0430747, on obtient une modulation de déphasage

$\phi_{m0}$ comme représentée sur les figures 10 et 12.

La figure 10 correspond à un cas « escalier », la modulation de déphasage de mise au biais $\phi_{b0}$ associée de la figure 9 passant d'un des deux niveaux bas à l'un des deux niveaux hauts à l'instant $t = t_R$ de la retombée de rampe.

De la même manière, la figure 12 correspond à un cas « mur », la modulation de déphasage de mise au biais $\phi_{b0}$ associée de la figure 11 opérant une transition d'un des deux niveaux hauts à l'un des deux niveaux bas à l'instant $t = t_R$ de la retombée de rampe.

Ainsi, dans les deux cas précités, la modulation de déphasage $\phi_{m0}$ proposée par le document EP0430747 a ainsi une amplitude totale sensiblement égale à $2\pi + 18\pi/16$, soit une valeur supérieure à $3\pi$.

Pour atteindre une si grande amplitude, l'excursion en tension (volts) sur le modulateur de phase doit être élevée, si bien que les non-linéarités de la chaîne de modulation limitent la précision de la mesure du paramètre.

Afin de remédier à l'inconvénient précité, le but de la présente invention est de proposer un dispositif de mesure à fibre optique dans lequel un paramètre à mesurer engendre une différence de phase entre deux ondes contra-propagatives dans lequel les effets gênants des non-linéarités de la chaîne de modulation sont réduits.

À cet effet, l'invention concerne un dispositif de mesure à fibre optique du type dans lequel un paramètre à mesurer engendre une différence de phase $\Delta\phi_p$ entre deux ondes contra-propagatives, comportant :

- une source lumineuse,
- un interféromètre en anneau de SAGNAC à fibre optique, de préférence monomode, comportant une bobine et un élément séparateur, dans lequel se propagent lesdites deux ondes contra-propagatives, ledit interféromètre en anneau ayant une fréquence propre $f_p$,
- un détecteur de rayonnement électromagnétique, recevant la puissance lumineuse sortant dudit interféromètre en anneau et délivrant un signal électrique modulé représentatif de la puissance lumineuse, qui est fonction de la différence de phase totale $\Delta\phi_t$ entre lesdites deux ondes contra-propagatives à la sortie dudit interféromètre en anneau,
- une chaîne de modulation apte à moduler ladite puissance lumineuse sortant dudit interféromètre en anneau, ladite chaîne de modulation comportant au moins un modulateur de phase placé dans ledit interféromètre en anneau et apte à générer en sortie de ladite chaîne de modulation une modulation de déphasage $\phi_m(t)$, introduisant entre lesdites deux ondes contra-propagatives une modulation de différence de phase $\Delta\phi_m(t)$ telle que : $\Delta\phi_m(t) = \phi_m(t) - \phi_m(t-\Delta\tau_g)$, $\Delta\tau_g = 1/(2 f_p)$ étant la différence de temps de transit entre lesdites deux ondes contra-propagatives déterminée entre ledit modulateur de phase et ledit élément séparateur, et

- des moyens de traitement du signal comportant :

  - un convertisseur analogique / numérique numérisant ledit signal électrique modulé reçu du détecteur et représentatif de ladite puissance lumineuse reçue par ledit détecteur pour délivrer un signal électrique numérique, et
  - une unité de traitement numérique apte à traiter ledit signal électrique numérique pour délivrer un signal fonction de ladite différence de phase $\Delta\phi_p$ et dudit paramètre à mesurer,

- des moyens de mise au biais adaptés à générer un premier signal de mise au biais produisant en sortie de la chaîne de modulation une première composante de modulation de déphasage de mise au biais $\phi_{b1}(t)$ en créneaux carrés d'amplitude $\pi/a_1$, $a_1$ étant un nombre réel non nul, périodique à une première fréquence de modulation de mise au biais $f_{b1}$ telle que $f_{b1} = (2k_1 + 1)f_p$, $k_1$ étant un entier naturel et $f_p$ étant la fréquence propre,

- des moyens de contre-réaction adaptés à traiter ledit signal fonction de ladite différence de phase $\Delta\phi_p$ pour générer un premier signal de contre-réaction, produisant en sortie de la chaîne de modulation une première composante de modulation de déphasage de contre-réaction $\phi_{cr1}(t)$ en marches d'escalier, chaque marche ayant une durée $\Delta\tau_g/(2k_1+1)$, ladite première composante de modulation de déphasage de contre-réaction $\phi_{cr1}(t)$ introduisant entre lesdites deux ondes contra-propagatives une première composante de modulation de différence de phase de contre-réaction $\Delta\phi_{cr1}(t) = \phi_{cr1}(t) - \phi_{cr1}(t-\Delta\tau_g)$ fonction de ladite différence de phase $\Delta\phi_p$,

- des moyens de commande de ladite chaîne de modulation adaptés à traiter ledit premier signal de mise au biais et ledit premier signal de contre-réaction pour délivrer au moins un premier signal de commande en entrée de ladite chaîne de modulation, produisant en sortie de la chaîne de modulation une première composante de modulation de déphasage $\phi_{m1}(t)$ qui est la somme en phase de ladite première composante de modulation de déphasage de mise au biais $\phi_{b1}(t)$ et de ladite première composante de modulation de déphasage de contre-réaction $\phi_{cr1}(t)$, de sorte que $\phi_{m1}(t) = \phi_{b1}(t) + \phi_{cr1}(t)$,

ledit dispositif de mesure à fibre optique étant caractérisé en ce que les moyens de commande de ladite chaîne de modulation sont agencés pour que ladite première composante de modulation de déphasage $\phi_{m1}(t)$ opère une transition de deux fois l'amplitude de la première composante de modulation de déphasage de mise au biais $\phi_{b1}(t)$, soit $2\pi/a_1$, lorsque son niveau dépasse l'amplitude de la première composante de modulation de déphasage de mise au biais $\phi_{b1}(t)$, soit $\pi/a_1$.

On entendra ici qu'une transition de la première composante de modulation de déphasage $\phi_{m1}(t)$ correspond à un changement de son niveau, cette transition pouvant se faire :

- soit vers le bas lorsque la première composante de modulation de déphasage de contre-réaction $\phi_{cr1}(t)$ est en marches d'escalier montant de telle sorte que la première composante de modulation de différence de phase de contre-réaction $\Delta\phi_{cr1}(t)$ soit positive lorsque la différence de phase $\Delta\phi_p$ due au paramètre à mesurer est négative,
- soit vers le haut lorsque la première composante de modulation de déphasage de contre-réaction $\phi_{cr1}(t)$ est en marches d'escalier descendant de telle sorte que la première composante de modulation de différence de phase de contre-réaction $\Delta\phi_{cr1}(t)$ soit négative lorsque la différence de phase $\Delta\phi_p$ due au paramètre à mesurer est positive.

Dans le cas d'une transition vers le bas de la première composante de modulation de déphasage $\phi_{m1}(t)$, on parlera par la suite de retombée de cette modulation. Dans le cas d'une transition vers le haut de la première composante de modulation de déphasage $\phi_{m1}(t)$, on parlera alors de remontée de cette modulation.

Ainsi, ledit dispositif de mesure à fibre optique selon l'invention permet de réduire l'amplitude de la modulation de déphasage $\phi_m(t)$ grâce à la sommation entre la première composante de modulation de déphasage de mise au biais $\phi_{b1}(t)$ et la modulation de déphasage de contre-réaction $\phi_{cr}(t)$ et à la transition opérée par la modulation résultante de cette somme.

En effet, selon l'invention, cette amplitude est toujours inférieure à $2\pi/a_1$, si bien que la plage d'excursion utilisée sur la chaîne de modulation est réduite. Ceci limite alors les effets des non-linéarités de la chaîne de modulation sur la modulation de déphasage $\phi_m$, celle-ci ayant ici une seule composante $\phi_{m1}$.

De plus, en utilisant une modulation de déphasage $\phi_{m1}(t)$ centrée, on élimine les défauts apparaissant à la retombée ou à la remontée de la modulation dus aux non-linéarités de la chaîne de modulation. Ceci permet notamment d'asservir plus facilement la fonction de transfert de la chaîne de modulation.

Par ailleurs, d'autres caractéristiques avantageuses et non limitatives du dispositif selon l'invention sont les suivantes :

- ladite première composante de modulation de déphasage de contre-réaction $\phi_{cr1}(t)$ présente des marches d'escalier de hauteur $-\Delta\phi_p/(2k_1+1)$, de telle sorte que ladite première composante de modulation de différence de phase de contre-réaction $\Delta\phi_{cr1}(t)$ soit telle que $\Delta\phi_{cr1}(t) = -\Delta\phi_p$, pour compenser ladite différence de phase $\Delta\phi_p$ due au paramètre à mesurer ;
- les moyens de mise au biais sont adaptés à générer un second signal de mise au biais produisant en sortie de la chaîne de modulation une seconde composante de modulation de déphasage de mise au biais $\phi_{b2}(t)$, ladite seconde composante de modulation de déphasage de mise au biais $\phi_{b2}(t)$ étant :

- une modulation en créneaux carrés d'amplitude $\pi/a_2$, $a_2$ étant un nombre réel non nul différent de $a_1$,
- périodique à une seconde fréquence de modulation de mise au biais $f_{b2}$ telle que $f_{b2} = (2k_2+1) f_p$, $k_2$ étant un entier naturel tel que $(2k_1+1)$ et $(2k_2+1)$ soient multiples l'un de l'autre, et $f_p$ étant la fréquence propre,
- en quadrature par rapport à la première composante de modulation de déphasage de mise au biais $\phi_{b1}(t)$;

- $a_1=1$;
- $a_2=1$;
- ledit dispositif de mesure à fibre optique comprend également des moyens d'asservissement de gain de ladite chaîne de modulation permettant de maintenir ajustée la fonction de transfert de ladite chaîne de modulation ;
- il est prévu que :

  - $a_1=1$,
  - ladite première composante de modulation de déphasage de contre-réaction $\phi_{cr1}(t)$ présente des marches d'escalier de hauteur $[a_2/(a_2-1)][-\Delta\phi_p/(2k_1+1)]$, $a_2$ étant un nombre réel strictement supérieur à $a_1 = 1$,
  - lesdits moyens de mise au biais sont adaptés à générer un second signal de mise au biais produisant en sortie de la chaîne de modulation une seconde composante de modulation de déphasage de mise au biais $\phi_{b2}(t)$, ladite seconde composante de modulation de déphasage de mise au biais $\phi_{b2}(t)$ étant :

    - une modulation carrée en créneaux d'amplitude $\pi/a_2$,
    - périodique à une seconde fréquence de modulation de mise au biais $f_{b2}$ telle que $f_{b2} = f_{b1}=(2k_1+1)f_p$, $f_{b1}$ étant la première fréquence de modulation de mise au biais et $f_p$ étant la fréquence propre, et
    - en quadrature retard par rapport à la première composante de modulation de déphasage de mise au biais $\phi_{b1}(t)$,

  - lesdits moyens de contre-réaction sont adaptés à générer un seconde signal de contre-réaction, produisant en sortie de la chaîne de modulation une seconde composante de modulation de déphasage de contre-réaction $\phi_{cr2}(t)$, ladite seconde composante de modulation de déphasage de contre-réaction $\phi_{cr2}(t)$ étant :

- en marches d'escalier, chaque marche ayant une durée $\Delta\tau_g/(2k_1+1)$ et une hauteur $[1/(a_2-1)][-\Delta\phi_p/(2k_1+1)]$,
- en quadrature retard par rapport à la première composante de modulation de déphasage de contre-réaction $\phi_{cr1}(t)$, et
- ladite seconde composante de modulation de déphasage de contre-réaction $\phi_{cr2}(t)$ introduisant une seconde composante de modulation de différence de phase de contre-réaction $\Delta\phi_{cr2}(t) = \phi_{cr2}(t) - \phi_{cr2}(t-\Delta\tau_g)$ entre lesdites deux ondes contra-propagatives, de telle sorte que la différence entre la première composante de modulation de différence de phase de contre-réaction $\Delta\phi_{cr1}(t)$ et la seconde composante de modulation de différence de phase de contre-réaction $\Delta\phi_{cr2}(t)$ compense ladite différence de phase $\Delta\phi_p$, soit $\Delta\phi_{cr1}(t) - \Delta\phi_{cr2}(t) = -\Delta\phi_p$,
- lesdits moyens de commande de ladite chaîne de modulation sont adaptés à traiter ledit second signal de mise au biais et ledit second signal de contre-réaction pour délivrer au moins un second signal de commande en entrée de ladite chaîne de modulation, produisant en sortie de la chaîne de modulation une seconde composante de modulation de déphasage $\phi_{m2}(t)$ qui est la somme de ladite seconde composante de modulation de déphasage de mise au biais $\phi_{b2}(t)$ et de ladite seconde composante de modulation de déphasage de contre-réaction $\phi_{cr2}(t)$, de sorte que $\phi_{m2}(t) = \phi_{b2}(t) + \phi_{cr2}(t)$, et
- les moyens de commande sont agencés pour que ladite seconde composante de modulation de déphasage $\phi_{m2}(t)$ opère une transition de deux fois l'amplitude de la seconde composante de modulation de déphasage de mise au biais $\phi_{b2}(t)$, soit $2\pi/a_2$, lorsque son niveau dépasse l'amplitude de la seconde composante de modulation de déphasage de mise au biais $\phi_{b2}(t)$, soit $\pi/a_2$, la modulation de déphasage $\phi_m(t)$ étant égale à la différence entre la première composante de modulation de déphasage $\phi_{m1}(t)$ et la seconde composante de modulation de déphasage $\phi_{m2}(t)$ de sorte que $\phi_m(t) = \phi_{m1}(t) - \phi_{m2}(t)$,

- $k_2 = 0$, et
- $k_1 = 0$.

Le dispositif de mesure selon l'invention est particulièrement bien adapté à la réalisation d'un gyromètre. Dans ce cas, le paramètre à mesurer est une composante de la vitesse de rotation de l'interféromètre en anneau.

Ainsi, l'invention concerne également un gyromètre, caractérisé en ce qu'il est conforme au dispositif de mesure à fibre optique selon l'invention, le paramètre à mesurer étant une composante de la vitesse de rotation de l'interféromètre en anneau.

Ce gyromètre entre avantageusement dans la réalisation de centrales de navigation ou de stabilisation inertielle.

Ainsi, l'invention propose également une centrale de navigation ou de stabilisation inertielle comportant au moins un gyromètre selon l'invention.

Des modes de réalisation de l'invention seront décrits en détail en référence aux dessins dans lesquels :

- la figure 1 représente une modulation de déphasage de contre-réaction $\phi_{cr0}$ en marches d'escalier montant selon l'art antérieur ;
- la figure 2 représente une modulation de déphasage de mise au biais $\phi_{b0}$ en créneaux selon l'art antérieur ;
- la figure 3 représente une modulation de déphasage $\phi_{m0}$ selon l'art antérieur, qui est la somme de la modulation de déphasage de contre-réaction $\phi_{cr0}$ de la figure 1 et de la modulation de déphasage de mise au biais $\phi_{b0}$ de la figure 2 ;
- la figure 4 représente une modulation de déphasage de contre-réaction $\phi_{cr0}$ en marches d'escalier montant selon l'art antérieur, qui retombe de $2\pi$ à l'instant $t = t_R$;
- la figure 5 représente une modulation de déphasage de mise au biais $\phi_{b0}$ en créneaux selon l'art antérieur qui passe d'un niveau haut à un niveau bas à l'instant $t = t_R$ ;
- la figure 6 représente une modulation de déphasage $\phi_{m0}$ selon l'art antérieur, qui est la somme de la modulation de déphasage de contre-réaction $\phi_{cr0}$ de la figure 4 et de la modulation de déphasage de mise au biais $\phi_{b0}$ de la figure 5
- la figure 7 représente une modulation de déphasage de mise au biais $\phi_{b0}$ en créneaux selon l'art antérieur qui passe d'un niveau bas à un niveau haut à l'instant $t = t_R$;
- la figure 8 représente une modulation de déphasage $\phi_{m0}$ selon l'art antérieur, qui est la somme de la modulation de déphasage de contre-réaction $\phi_{cr0}$ de la figure 4 et de la modulation de déphasage de mise au biais $\phi_{b0}$ de la figure 7 ;
- la figure 9 représente une modulation de déphasage de mise au biais $\phi_{b0}$ dite « 4 états » selon l'art antérieur qui passe d'un niveau bas à un niveau haut à l'instant $t = t_R$ ;
- la figure 10 représente une modulation de déphasage $\phi_{m0}$ selon l'art antérieur, qui est la somme de la modulation de déphasage de contre-réaction $\phi_{cr0}$ de la figure 4 et de la modulation de déphasage de mise au biais $\phi_{b0}$ de la figure 9 ;
- la figure 11 représente une modulation de déphasage de mise au biais $\phi_{b0}$ dite « 4 états » selon l'art antérieur qui passe d'un niveau haut à un niveau bas à l'instant t = $t_R$ ;

- la figure 12 représente une modulation de déphasage $\phi_{m0}$ selon l'art antérieur, qui est la somme de la modulation de déphasage de contre-réaction $\phi_{cr0}$ de la figure 4 et de la modulation de déphasage de mise au biais $\phi_{b0}$ de la figure 11 ;

- la figure 13 représente une vue schématique du dispositif de mesure selon l'art antérieur ;

- la figure 14 représente un schéma fonctionnel représentant les différents moyens mis en oeuvre dans le dispositif de mesure selon l'invention ;

- la figure 15 représente une première composante de modulation de déphasage de mise au biais $\phi_{b1}(t)$ en fonction du temps t ;

- la figure 16 représente une première composante de modulation de déphasage de contre-réaction $\phi_{cr1}(t)$ en fonction du temps t, sous la forme d'une rampe montante en marches d'escalier ;

- la figure 17 représente une première composante de modulation de déphasage $\phi_{m1}(t)$ en fonction du temps t qui est la somme de la première composante de modulation de déphasage de mise au biais $\phi_{b1}(t)$ de la figure 15 et de la première composante de modulation de déphasage de contre-réaction $\phi_{cr1}(t)$ de la figure 16 ;

- la figure 18 représente une première composante de modulation de déphasage de contre-réaction $\phi_{cr1}(t)$ en fonction du temps t, sous la forme d'une rampe descendante en marches d'escalier ;

- la figure 19 représente une première composante de modulation de déphasage $\phi_{m1}(t)$ en fonction du temps t qui est la somme de la première composante de modulation de déphasage de mise au biais $\phi_{b1}(t)$ de la figure 15 et à la première composante de modulation de déphasage de contre-réaction $\phi_{cr1}(t)$ de la figure 18 ;

- la figure 20 représente la première composante de modulation de différence de phase $\Delta\phi_{m1}(t)$ correspondant à la première composante de modulation de déphasage $\phi_{m1}(t)$ de la figure 17 ;

- la figure 21 représente la première composante de modulation de différence de phase $\Delta\phi_{m1}(t)$ correspondant à la première composante de modulation de déphasage $\phi_{m1}(t)$ de la figure 19 ;

- la figure 22 représente la différence de phase totale $\Delta\phi_t(t)$ dans un premier mode de réalisation de l'invention, la puissance lumineuse reçue par le détecteur en sortie de l'interféromètre et le signal électrique modulé correspondant ;

- la figure 23 représente un schéma fonctionnel représentant les différents moyens mis en oeuvre dans le dispositif de mesure selon l'invention et comprenant des moyens d'asservissement de la fonction de transfert de la chaîne de modulation ;

- la figure 24 représente une première composante de modulation de déphasage $\phi_{m1}(t)$ dans un deuxième mode de réalisation de l'invention ;

- la figure 25 représente une seconde composante de modulation de déphasage de mise au biais $\phi_{b2}(t)$ de niveau $+\pi/8$ et $-\pi/8$, dans un deuxième mode de réalisation de l'invention ;

- la figure 26 représente la modulation de déphasage $\phi_m(t)$ dans le deuxième mode de réalisation, résultant de la sommation de première composante de modulation de déphasage $\phi_{m1}(t)$ de la figure 24 et de la seconde composante de modulation de déphasage de mise au biais $\phi_{b2}(t)$ de la figure 25 ;

- la figure 27 représente la modulation de différence de phase $\Delta\phi_m(t)$ correspondant à la modulation de déphasage $\phi_m(t)$ de la figure 26 ;

- la figure 28 représente la différence de phase totale $\Delta\phi_t(t)$ dans le deuxième mode de réalisation de l'invention, la puissance lumineuse reçue par le détecteur en sortie de l'interféromètre et le signal électrique modulé correspondant lorsque que la fonction de transfert de la chaîne de modulation est correctement ajustée ;

- la figure 29 représente la différence de phase totale $\Delta\phi_t(t)$ dans le deuxième mode de réalisation de l'invention, la puissance lumineuse reçue par le détecteur en sortie de l'interféromètre et le signal électrique modulé correspondant lorsque que la première composante de modulation de différence de phase de contre-réaction $\Delta\phi_{cr1}(t)$ ne compense pas exactement la différence de phase $\Delta\phi_p$ due au paramètre à mesurer et lorsque que la fonction de transfert de la chaîne de modulation est correctement ajustée ;

- la figure 30 représente la différence de phase totale $\Delta\phi_t(t)$ dans le deuxième mode de réalisation de l'invention, la puissance lumineuse reçue par le détecteur en sortie de l'interféromètre et le signal électrique modulé correspondant lorsque que la fonction de transfert de la chaîne de modulation est incorrectement ajustée ;

- la figure 31 représente une première composante de modulation de déphasage $\phi_{m1}(t)$ dans un troisième mode de réalisation de l'invention ;

- la figure 32 représente une seconde composante de modulation de déphasage de mise au biais $\phi_{b2}(t)$ de niveau $+\pi/2$ et $-\pi/2$, dans le troisième mode de réalisation de l'invention ;

- la figure 33 représente la modulation de déphasage $\phi_m(t)$ dans le troisième mode de réalisation, résultant de la sommation de première composante de modulation de déphasage $\phi_{m1}(t)$ de la figure 31 et de la seconde composante de modulation de déphasage de mise au biais $\phi_{b2}(t)$ de la figure 32 ;

- la figure 34 représente la modulation de différence de phase $\Delta\phi_m(t)$ correspondant à la modulation de déphasage $\phi_m(t)$ de la figure 33 ;

- la figure 35 représente la différence de phase totale $\Delta\phi_t(t)$ dans le troisième mode de réalisation de l'invention, la puissance lumineuse reçue par le détecteur en sortie de l'interféromètre et le signal électrique modulé correspondant lorsque que la fonction de transfert de la chaîne de modulation est correctement ajustée ;

- la figure 36 représente une première composante de modulation de déphasage $\phi_{m1}(t)$ dans un quatrième mode de réalisation de l'invention ;
- la figure 37 représente une seconde composante de modulation de déphasage $\phi_{m2}(t)$ dans le quatrième mode de réalisation de l'invention ;
- la figure 38 représente la modulation de déphasage $\phi_m(t)$ dans le quatrième mode de réalisation, résultant de la différence de la première composante de modulation de déphasage $\phi_{m1}(t)$ de la figure 36 et de la seconde composante de modulation de déphasage $\phi_{m2}(t)$ de la figure 37 ;
- la figure 39 représente la modulation de différence de phase $\Delta\phi_m(t)$ correspondant à la modulation de déphasage $\phi_m(t)$ de la figure 38 ;
- la figure 40 représente la différence de phase totale $\Delta\phi_t(t)$ dans le quatrième mode de réalisation de l'invention, la puissance lumineuse reçue par le détecteur en sortie de l'interféromètre et le signal électrique modulé correspondant lorsque que la fonction de transfert de la chaîne de modulation est correctement ajustée.

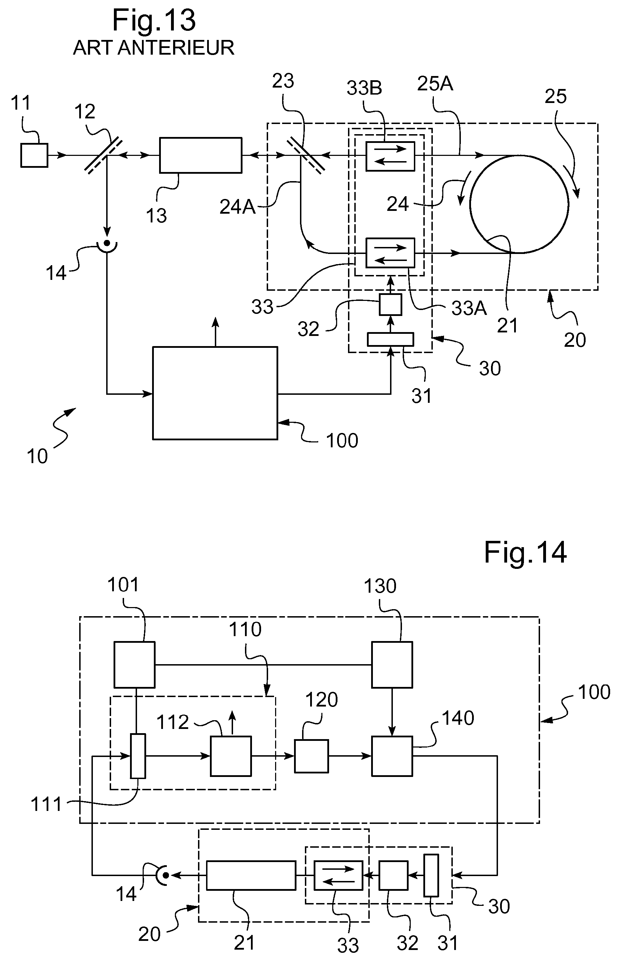

La figure 13 représente un dispositif 10 de mesure à fibre optique selon l'art antérieur du type dans lequel un paramètre à mesurer engendre une différence de phase $\Delta\phi_p$ entre deux ondes.

Le dispositif 10 de mesure à fibre optique comporte tout d'abord une source lumineuse 11 comprenant ici une diode laser.

En variante, la source lumineuse peut comprendre par exemple une diode super-luminescente ou une source lumineuse à fibre dopée de type ASE (pour « *Amplified Spontaneous Emission »* en anglais).

Le dispositif 10 comprend aussi un premier élément séparateur 12. Ce premier élément séparateur 12 est ici une lame semi-réfléchissante ayant une transmittance de 50% et une réflectance de 50%.

En variante, l'élément séparateur peut être par exemple un coupleur 2x2 à -3 décibels ou un circulateur optique.

L'onde lumineuse émise par la source lumineuse 11 est ainsi transmise en partie par le premier élément séparateur 12 en direction d'un filtre optique 13 en sortie duquel l'onde lumineuse a été filtrée. Le filtre optique 13 comporte de préférence un polariseur et un filtre spatial. Ce filtre spatial est ici une fibre optique monomode, de préférence à conservation de polarisation.

Le dispositif 10 comporte également un interféromètre en anneau 20 de SAGNAC comprenant une bobine 21 d'une fibre optique enroulée sur elle-même. Il s'agit ici d'une fibre optique, de préférence de type monomode et à conservation de polarisation.

Cet interféromètre en anneau 20 de SAGNAC comprend également un second élément séparateur 23 permettant de diviser l'onde sortant du filtre optique 13 en deux ondes contra-propagatives 24, 25 sur les deux bras de l'interféromètre en anneau 20, ces deux bras définissant deux chemins optiques 24A et 25A. Le second élément séparateur 23 est ici une lame semi-réfléchissante ayant une transmittance de 50% et une réflectance de 50%.

Le second élément séparateur 23 permet également de recombiner les deux ondes contra-propagatives 24, 25 à la sortie de l'interféromètre en anneau 20.

En variante, le second élément séparateur peut être par exemple un coupleur 2x2 à -3 décibels ou une jonction Y en optique intégrée.

Les deux ondes contra-propagatives 24, 25 passent alors à travers le filtre optique 13 et sont réfléchies par le premier élément séparateur 12 en direction d'un détecteur 14 de rayonnement électromagnétique.

Ce détecteur 14 est ici une photodiode à semiconducteur.

Le détecteur 14 est sensible à la puissance lumineuse P reçue, qui est ici fonction de l'état d'interférence entre les deux ondes contra-propagatives 24, 25 lors de leur recombinaison à la sortie de l'interféromètre en anneau 20 de SAGNAC. Il délivre ainsi un signal électrique qui est représentatif de la différence de phase totale $\Delta\phi_t$ entre les deux ondes contra-propagatives 24, 25.

Il est connu que pour un interféromètre en anneau 20 de SAGNAC la puissance lumineuse $P(\Delta\phi_t)$ reçue par le détecteur en fonction de la différence de phase totale $\Delta\phi_t$ est une fonction cosinusoïdale de cette différence de phase totale $\Delta\phi_t$, c'est-à-dire que l'on a la relation suivante : $P(\Delta\phi_t) = P0[1 + \cos(\Delta\phi_t)]$.

On verra dans la suite de la description que ce signal électrique est un signal électrique modulé.

Le dispositif 10 comporte également une chaîne de modulation 30 comprenant un convertisseur numérique / analogique 31, un amplificateur 32 et un modulateur de phase 33.

Le convertisseur numérique / analogique 31 traite un signal numérique de commande délivré par les moyens de commande 140, la décomposition de ce signal étant précisée en détail par la suite. Le convertisseur numérique / analogique 31 délivre en sortie un signal analogique de commande.

L'amplificateur 32 traite alors ce signal analogique de commande pour délivrer une tension de commande de modulation $V_m(t)$ au modulateur de phase 33.

Le modulateur de phase 33 est placé dans l'interféromètre en anneau 20 et fait donc également partie de celui-ci. Il comprend ici avantageusement une paire de modulateurs de phase élémentaires 33A, 33B montés en « *push-pull »,* placés respectivement à chacune des extrémités des bras de l'interféromètre en anneau 20 de SAGNAC.

Il est connu que le montage en *« push-pull »* permet d'éliminer de la réponse du modulateur de phase 33 les non-linéarités d'ordre pair (ordre 2, ordre 4, *etc...*). Ainsi, la chaîne de modulation 30 présente un réponse non-linéaire impaire avec pour composantes principales la composante d'ordre 1 (composante linéaire) et la composante d'ordre 3.

Les modulateurs de phase élémentaires 33A, 33B sont ici du type électro-optique, dit à effet Pockels, en optique intégrée sur niobate de lithium ($LiNbO_3$) par échange protonique.

Le modulateur de phase 33 permet, lorsqu'on applique en son entrée la tension de commande de modulation $V_m(t)$ dépendant du temps, de générer une modulation de déphasage $\phi_m(t)$ proportionnelle et donc avec la même dépendance temporelle, sur une onde lumineuse le traversant à l'instant t donné dans un sens ou dans un autre.

Dans le cas de l'interféromètre en anneau 20 de SAGNAC représenté sur la figure 13, la différence des temps de transit des ondes contra-propagatives 24, 25 le long des deux chemins optiques 24A, 25A entre le modulateur de phase 33 et le second élément séparateur 23 est notée $\Delta\tau_g$.

Ainsi, la modulation de déphasage $\phi_m(t)$ générée par le modulateur de phase 33 commandé par la tension de commande de modulation $V_m(t)$ introduit entre les deux ondes contra-propagatives 24, 25 une modulation de différence de phase $\Delta\phi_m(t)$ telle que : $\Delta\phi_m(t)$ = $\phi_m(t)$ - $\phi_m(t-\Delta\tau_g)$.

La différence de temps de transit $\Delta\tau_g$ définit également une fréquence propre $f_p$ de l'interféromètre en anneau 20 de SAGNAC par la relation : $f_p$ = 1 / (2 $\Delta\tau_g$).

Cette fréquence propre $f_p$ dépend donc de la longueur de la bobine 21 dans l'interféromètre en anneau 20 de SAGNAC. Avec la bobine 21 de fibre optique utilisée ici, bobine présentant une longueur de 1 kilomètre, la fréquence propre $f_p$ de l'interféromètre en anneau 20 de SAGNAC est d'environ 100 kilohertz (kHz), correspondant à une différence de temps de transit $\Delta\tau_g$ de 5 microsecondes ($\mu$s).

La puissance lumineuse reçue $P(\Delta\phi_t)$ par le détecteur 14 est également modulée et le signal électrique délivré par le détecteur 14 sera donc un signal électrique modulé, dont des exemples seront donnés par la suite.

Ce signal électrique modulé est transmis à des moyens électroniques 100 qui le traitent pour délivrer un signal fonction de la différence de phase $\Delta\phi_p$ et du paramètre à mesurer.

À cet effet, les moyens électroniques 100 comprennent des moyens de traitement du signal 110, tels que représentés sur la figure 14. Ces moyens de traitement du signal 110 comportent un convertisseur analogique / numérique 111 numérisant le signal électrique modulé fourni par le détecteur 14 pour délivrer un signal électrique numérique.

Cette opération de numérisation est réalisée à une fréquence de synchronisation fixée par l'horloge 101. La fréquence de synchronisation de l'horloge 101 est de préférence un multiple de la fréquence propre $f_p$ de l'interféromètre en anneau 20 de SAGNAC.

Les moyens de traitement du signal 110 comprennent également une unité de traitement numérique 112 configurée pour traiter le signal électrique numérique fourni en sortie du convertisseur analogique / numérique 111. L'unité de traitement numérique 112 comporte ici un démodulateur numérique, un filtre numérique de boucle d'asservissement alimenté par un premier signal numérique démodulé sortant du démodulateur numérique et un registre.

L'unité de traitement numérique 112 délivre un signal fonction de la différence de phase $\Delta\phi_p$ et du paramètre à mesurer pour tout usage externe souhaité.

Les moyens électroniques 100 commandent également en retour la chaîne de modulation 30.

À cet effet, les moyens électroniques 100 comportent, d'une part, des moyens de mise au biais 130 et, d'autre part, des moyens de contre-réaction 120.

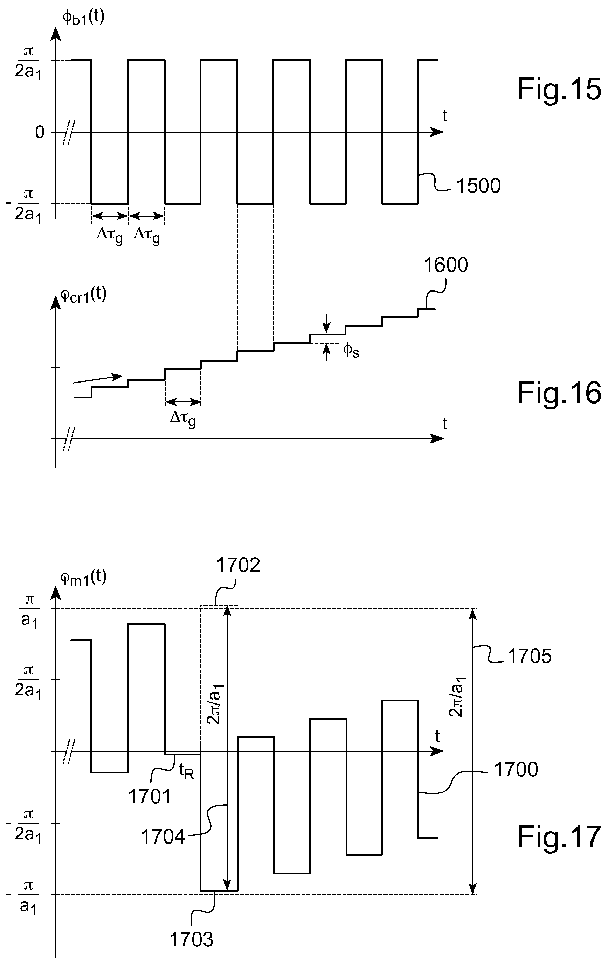

D'un côté, les moyens de mise au biais 130 génèrent un premier signal de mise au biais produisant en sortie de la chaîne de modulation une première composante de modulation de déphasage de mise au biais $\phi_{b1}(t)$ telle que représentée sur la figure 15.

Cette première composante de modulation de déphasage de mise au biais $\phi_{b1}(t)$ est une modulation en créneaux présentant ici un niveau haut de valeur $\pi/2a_1$ ($a_1$ étant un nombre réel non nul) et un niveau bas de valeur $-\pi/2a_1$.

Cette modulation est donc :

- carrée : la durée du niveau haut est ici égale à la durée du niveau bas, et
- d'amplitude $\pi/a_1$, l'amplitude étant définie comme la distance entre le niveau haut ($\pi/2a_1$) et le niveau bas ($-\pi/2a_1$) de la modulation, soit $\pi/2a_1$ - ($-\pi/2a_1$) = $2(\pi/2a_1)$ = $\pi/a_1$.

Comme illustré sur la figure 15, il est avantageux que la première composante de modulation de déphasage $\phi_{m1}(t)$ soit centrée autour de zéro. En effet, ceci permet de diminuer les effets des non-linéarités de la chaîne de modulation 30, grâce notamment au montage en *« push-pull »* du modulateur de phase 33.

Néanmoins, conformément à l'invention, on obtiendrait un résultat équivalent avec une modulation non centrée.

En outre, la première composante de modulation de déphasage de mise au biais $\phi_{b1}(t)$ est une modulation périodique à une première fréquence de modulation de mise au biais $f_{b1}$ qui est ici telle que $f_{b1}$ = $f_p$, $f_p$ étant la fréquence propre de l'interféromètre en anneau 20 de SAGNAC. La période de la première composante de modulation de déphasage de mise au biais $\phi_{b1}(t)$ est donc égale à $2\Delta\tau_g$ et la durée de chacun des niveaux haut et bas est égale à $\Delta\tau_g$.

De manière générale, la première fréquence de modulation de mise au biais $f_{b1}$ peut être telle que $f_{b1}$ = $(2k_1+1)f_p$, $k_1$ étant un entier naturel et $f_p$ étant la fréquence propre.

Les moyens de mise au biais 130 sont configurés pour générer un premier signal de mise au biais à des instants précis, synchronisés par la fréquence de l'horloge 101.

Les moyens de mise au biais 130 permettent de déplacer le point de fonctionnement du dispositif 10 de mesure afin de l'utiliser avec la meilleure sensibilité possible.

D'un autre côté, les moyens de contre-réaction 120 traitent le signal fonction de la différence de phase $\Delta\phi_p$ pour générer un premier signal de contre-réaction, produisant en sortie de la chaîne de modulation une première composante modulation de déphasage de contre-réaction $\phi_{cr1}(t)$ telle que représentée sur la figure 16.

Cette première composante de modulation de déphasage de contre-réaction $\phi_{cr1}(t)$ est une modulation en marches d'escalier, chaque marche d'escalier ayant ici une durée $\Delta\tau_g$.

De manière générale, et lorsque la première fréquence de modulation de mise au biais $f_{b1}$ est telle que $f_{b1} = (2k_1+1)f_p$, la première composante de modulation de déphasage de contre-réaction $\phi_{cr1}(t)$ présente des marches d'escalier de durée $\Delta\tau_g/(2k_1+1)$.

La première composante de modulation de déphasage de contre-réaction $\phi_{cr1}(t)$ est en phase avec la première composante de modulation de déphasage de mise au biais $\phi_{b1}(t)$, c'est-à-dire que la première composante de modulation de déphasage de contre-réaction $\phi_{cr1}(t)$ passe d'une marche à une autre lors du passage de la première composante de modulation de déphasage de mise au biais $\phi_{b1}(t)$ d'un niveau à un autre.

Par ailleurs, comme illustré sur la figure 16, la première composante de modulation de déphasage de contre-réaction $\phi_{cr1}(t)$ présente des marches d'escalier de hauteur $\phi_s$ fonction de ladite différence de phase $\Delta\phi_p$. Le niveau de chaque marche étant ici plus haut que le précédent, on parle alors de rampe montante pour la première composante de modulation de déphasage de contre-réaction $\phi_{cr1}(t)$.

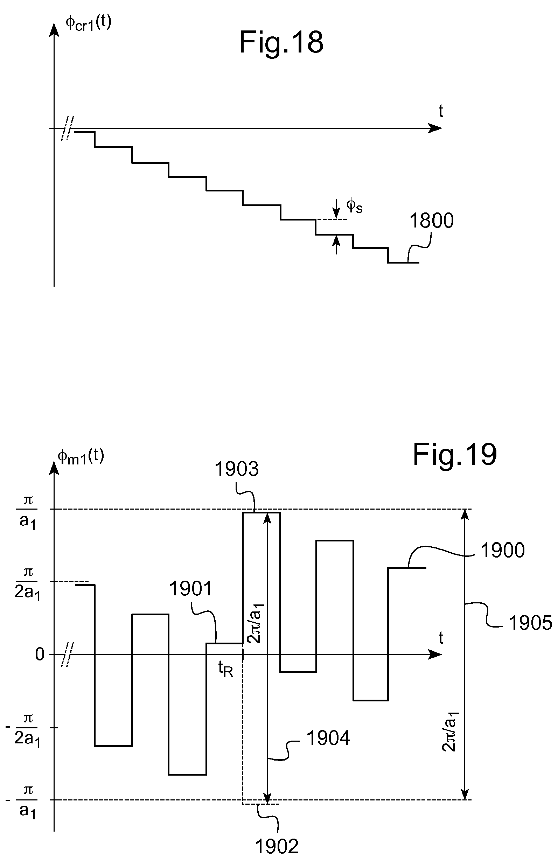

La figure 18 présente un exemple de première composante de modulation de déphasage de contre-réaction $\phi_{cr1}(t)$ qui est une rampe descendante, où le niveau de chaque marche est plus bas que le précédent. On verra dans la suite de la description dans quel cas la rampe est montante, et dans quel cas elle est descendante.

La première composante de modulation de déphasage de contre-réaction $\phi_{cr1}(t)$ introduit, entre les deux ondes contra-propagatives 24, 25, une première composante de modulation de différence de phase de contre-réaction $\Delta\phi_{cr1}(t) = \phi_{cr1}(t) - \phi_{cr1}(t-\Delta\tau_g) = \phi_s$ qui est fonction de la différence de phase $\Delta\phi_p$.

Les moyens de contre-réaction 120 comportent ici un accumulateur.

Les moyens électroniques 100 comportent en outre des moyens de commande 140 de la chaîne de modulation 30 qui traitent le premier signal de mise au biais et le premier signal de contre-réaction pour délivrer au moins un premier signal de commande en entrée de la chaîne de modulation 30.

Ce premier signal de commande produit en sortie de la chaîne de modulation 30 une première composante de modulation de déphasage $\phi_{m1}(t)$ qui est la somme en phase de la première composante de modulation de déphasage de mise au biais $\phi_{b1}(t)$ et de la première composante de modulation de déphasage de contre-réaction $\phi_{cr1}(t)$, de telle sorte que $\phi_{m1}(t)$ vérifie la relation : $\phi_{m1}(t) = \phi_{b1}(t) + \phi_{cr1}(t)$.

Les moyens de commande 140 possèdent deux entrées et une sortie. En entrée, les moyens de commande 140 reçoivent d'une part le premier signal de contre-réaction et d'autre part le premier signal de mise au biais. Ces signaux sont ensuite traités par les moyens de commande 140. En sortie, les moyens de commande 140 délivrent le premier signal de commande qui est alors transmis à la chaîne de modulation 30.

Ainsi commandée, la chaîne de modulation 30 génère une première composante de modulation de déphasage $\phi_{m1}(t)$ *via* le modulateur de phase 33. Une première composante de modulation de différence de phase $\Delta\phi_{m1}(t)$ est alors introduite entre les deux ondes contra-propagatives 24, 25 se propageant dans l'interféromètre en anneau de SAGNAC 20.

On va maintenant décrire ci-après les différents modes de réalisation particuliers de l'invention permettant de limiter les effets des non-linéarités de la chaîne de modulation 30 sur la mesure de la différence de phase $\Delta\phi_p$ et du paramètre à mesurer.

<u>1er mode de réalisation</u>

Dans ce premier mode de réalisation particulier de l'invention, la première composante de modulation de mise au biais $\phi_{b1}(t)$ 1500 est celle représentée sur la figure 15 et la première composante de modulation de contre-réaction $\phi_{cr1}(t)$ 1600 est celle représentée sur la figure 16.

Selon l'invention, les moyens de commande 140 de la chaîne de modulation 30 sont agencés de telle manière que la première composante de modulation de déphasage $\phi_{m1}(t)$ opère une transition de deux fois l'amplitude de la première composante de modulation de déphasage de mise au biais $\phi_{b1}(t)$, soit $2\pi/a_1$, lorsque son niveau dépasse l'amplitude de la première composante de modulation de déphasage de mise au biais $\phi_{b1}(t)$, soit $\pi/a_1$.

Ceci peut être compris à la lumière de la figure 17 sur laquelle on a représenté la première composante de modulation de déphasage $\phi_{m1}(t)$ 1700 qui a la forme d'une modulation en créneaux montante, à cause de la rampe montante de la figure 16.

On remarque sur la figure 17 qu'à l'instant t = $t_R$, la première composante de modulation de déphasage $\phi_{m1}(t)$ devait passer d'un niveau bas avant retombée 1701 à un niveau haut 1702 représenté en pointillé.

Cependant, comme ce niveau haut 1702 est tel qu'il dépasse légèrement la valeur $\pi/a_1$, c'est-à-dire la valeur de l'amplitude de la première composante de modulation de déphasage de mise au biais $\phi_{b1}(t)$ 1500, les moyens de commande 140 font retomber la première composante de modulation de déphasage $\phi_{m1}(t)$ 1700 pour amener le niveau haut 1702 vers le niveau bas après retombée 1703. L'amplitude 1704 de cette retombée est donc ici égale à $2\pi/a_1$, soit deux fois l'amplitude de la première composante de modulation de déphasage de mise au biais $\phi_{b1}(t)$ 1500.

Ainsi formée, la première composante de modulation de déphasage $\phi_{m1}(t)$ 1700 présente une amplitude maximale 1705 égale à $2\pi/a_1$. L'amplitude est ainsi diminuée et l'excursion sur la chaîne de modulation 30 est réduite, limitant les effets des non-linéarités de cette chaîne de modulation 30.

Selon une caractéristique avantageuse de ce premier mode de réalisation de l'invention, la première composante de modulation de déphasage de contre-réaction $\phi_{cr1}(t)$ 1600 de la figure 16 présente des marches d'escalier de hauteur $\phi_s$ telle que : $\phi_s = -\Delta\phi_p$, de telle sorte que la modulation de différence de phase de contre-réaction $\Delta\phi_{cr1}(t)$ soit égale à $-\Delta\phi_p$, pour compenser la différence de phase $\Delta\phi_p$ due au paramètre à mesurer.

Ceci permet notamment de faire fonctionner le dispositif 10 en boucle fermée afin d'atteindre une bonne linéarité et stabilité de la mesure du paramètre engendrant la différence de phase $\Delta\phi_p$.

Dans le cas où la différence de phase $\Delta\phi_p$ due au paramètre à mesurer est positive, la hauteur $\phi_s$ des marches d'escalier de la première composante de modulation de déphasage de contre-réaction $\phi_{cr1}(t)$ 1800 est négative, signifiant que cette première composante est une rampe descendante, comme cela est représenté sur la figure 18.

La première composante de modulation de déphasage $\phi_{m1}(t)$ 1900 prend alors la forme d'une modulation en créneaux descendante (voir figure 19).

On remarque sur la figure 19 qu'à l'instant $t = t_R$, la première composante de modulation de déphasage $\phi_{m1}(t)$ 1900 devait passer d'un niveau haut avant retombée 1901 à un niveau bas 1902 représenté en pointillé.

Cependant, comme ce niveau bas 1902 est tel qu'il dépasse, en valeur absolue, légèrement la valeur $\pi/a_1$, c'est-à-dire la valeur de l'amplitude de la première composante de modulation de déphasage de mise au biais $\phi_{b1}(t)$ 1500, les moyens de commande 140 font remonter la première composante de modulation de déphasage $\phi_{m1}(t)$ 1900 pour amener le niveau bas 1902 vers le niveau haut après remontée 1903. L'amplitude 1904 de cette remontée est donc ici égale à $2\pi/a_1$, soit deux fois l'amplitude de la première composante de modulation de déphasage de mise au biais $\phi_{b1}(t)$ 1500.

Ainsi formée, la première composante de modulation de déphasage $\phi_{m1}(t)$ présente encore une amplitude maximale 1905 égale à $2\pi/a_1$.

En comparant les cas des figures 17 et 19, correspondant respectivement au cas d'une rampe montante et au cas d'une rampe descendante, on comprend que l'on fait retomber ou remonter la première composante de modulation de déphasage $\phi_{m1}(t)$ lorsque la valeur du niveau qu'elle aurait dû atteindre sans retombée (ou sans remontée) est supérieure, en valeur absolue, à deux fois l'amplitude de la première composante de modulation de déphasage de mise au biais $\phi_{b1}(t)$.

On notera par ailleurs que dans ce premier mode de réalisation de l'invention la retombée (ou la remontée) de la première composante de modulation de déphasage $\phi_{m1}(t)$ est telle que celle-ci a une amplitude maximale, entre son niveau le plus haut et son niveau le plus bas, inférieure ou égale à deux fois l'amplitude de la première composante de modulation de déphasage de mise au biais $\phi_{b1}(t)$, soit $2\pi/a_1$.

Ainsi, l'amplitude de la modulation de déphasage est réduite par rapport au cas où une retombée (ou une remontée) de $2\pi$ est réalisée sur la première composante de modulation de déphasage de contre-réaction $\phi_{cr1}(t)$, indépendamment de sa somme avec la première composante de modulation de déphasage de mise au biais $\phi_{b1}(t)$. Dans ce cas, en effet, l'amplitude maximale serait d'environ $2\pi + \pi/a_1$.

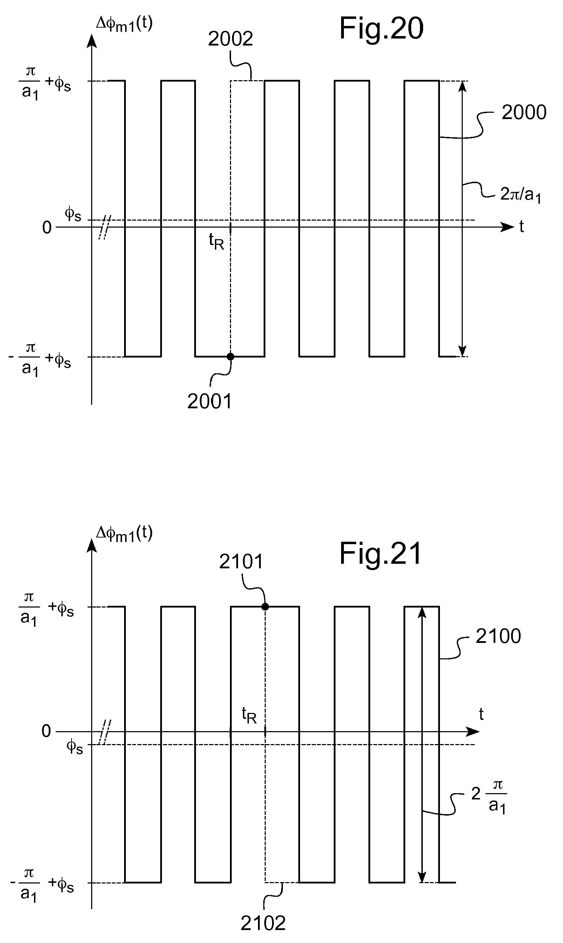

On a représenté respectivement sur les figures 20 et 21 les premières composantes de modulation de différence de phase $\Delta\phi_{m1}(t)$ introduites entre les ondes contra-propagatives 24, 25 et résultant de la génération des premières composantes de modulation de déphasage $\phi_{m1}(t)$ respectivement des figures 17 et 19 par la chaîne de modulation 30 commandée par les moyens de commande 140.

Dans le cas d'une rampe montante (i.e. $\phi_s > 0$, cas de la figure 20), la première composante de modulation de différence de phase $\Delta\phi_{m1}(t)$ 2000 est une modulation en créneaux, présentant un niveau haut de valeur $+\pi/a_1 + \phi_s$ et un niveau bas de valeur $-\pi/a_1 + \phi_s$, ces niveaux extrêmes étant donc symétriques par rapport à la ligne de niveau d'ordonnée $\phi_s$.

La première composante de modulation de différence de phase $\Delta\phi_{m1}(t)$ 2000 a une amplitude totale égale à $2\pi/a_1$.

On remarque par ailleurs sur la figure 20 que la première composante de modulation de différence de phase $\Delta\phi_{m1}(t)$ 2000 est alternativement sur son niveau haut et sur son niveau bas, jusqu'à l'instant $t = t_R$ de la retombée de la première composante de modulation de déphasage $\phi_{m1}(t)$ 1700 (voir figure 17) où elle demeure sur le même niveau bas 2001, au lieu de rejoindre le niveau haut 2002. Ensuite, la première composante de modulation de différence de phase $\Delta\phi_{m1}(t)$ 2000 reprend ses alternances entre son niveau haut et son niveau bas, et ce jusqu'à la prochaine retombée.

De la même manière, dans le cas d'une rampe descendante (i.e. $\phi_s < 0$, cas de la figure 21), la première composante de modulation de différence de phase $\Delta\phi_{m1}(t)$ 2100 est une modulation en créneaux, présentant un niveau haut de valeur $+\pi/a_1 + \phi_s$ et un niveau bas de valeur $-\pi/a_1 + \phi_s$, ces niveaux extrêmes étant donc symétriques par rapport à la ligne de niveau d'ordonnée $\phi_s$ ($\phi_s < 0$ ici).

La première composante de modulation de dif-

férence de phase $\Delta\phi_{m1}(t)$ 2100 a une amplitude totale égale à $2\pi/a_1$.

On remarque par ailleurs sur la figure 21 que la première composante de modulation de différence de phase $\Delta\phi_{m1}(t)$ 2100 est alternativement sur son niveau haut et sur son niveau bas, jusqu'à l'instant $t = t_R$ de la remontée de la première composante de modulation de déphasage $\phi_{m1}(t)$ 1900 (voir figure 19) où elle demeure sur le même niveau haut 2101, au lieu de rejoindre le niveau bas 2102. Ensuite, la première composante de modulation de différence de phase $\Delta\phi_{m1}(t)$ 2100 reprend ses alternances entre son niveau haut et son niveau bas, et ce jusqu'à la prochaine remontée.

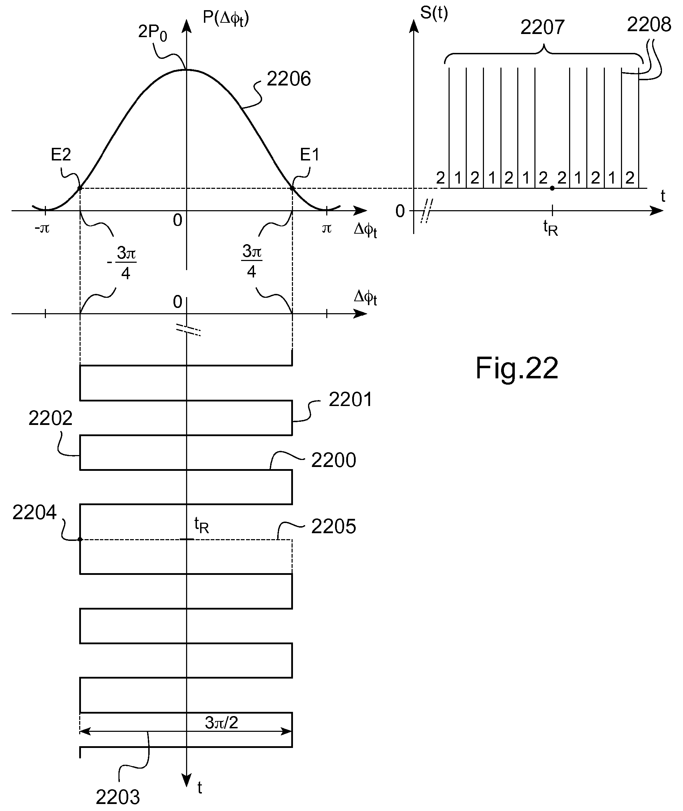

La figure 22 est un exemple du premier mode de réalisation de l'invention pour lequel $a_1 = 4/3$. On a ainsi représenté sur la figure 22 la différence de phase totale $\Delta\phi_t$ 2200 entre les deux ondes contra-propagatives 24, 25 se propageant dans l'interféromètre en anneau 20 de SAGNAC. La différence de phase totale $\Delta\phi_t$ est ici la somme de la différence de phase $\Delta\phi_p$ due au paramètre à mesurer et de la première composante de modulation de différence de phase $\Delta\phi_{m1} : \Delta\phi_t = \Delta\phi_p + \Delta\phi_{m1}$.

Pour cet exemple, la première composante de modulation de déphasage $\phi_{m1}(t)$ est formée à partir :

- d'une première composante de modulation de déphasage de mise au biais $\phi_{b1}(t)$ de niveaux $+3\pi/8$ (= $\pi/2a_1$) et $-3\pi/8$ (= $-\pi/2a_1$), et
- d'une première composante de modulation de déphasage de contre-réaction $\phi_{cr1}(t)$ telle que la valeur de la marche $\phi_s$ compense la différence de phase $\Delta\phi_p$ du paramètre à mesurer, de sorte que $\phi_s = -\Delta\phi_p$.

Ainsi, la première composante de modulation de différence de phase $\Delta\phi_{m1}(t)$ introduite entre les deux ondes contra-propagatives 24, 25 à partir de la génération de la première composante de modulation de déphasage $\phi_{m1}(t)$ par la chaîne de modulation 30 est telle que celle représentée sur la figure 22. C'est une modulation en créneaux, de niveaux extrêmes symétriques, de valeurs $+3\pi/4$ (niveau haut 2201) et $-3\pi/4$ (niveau bas 2202), son amplitude totale 2203 étant égale à $3\pi/2$.

Comme expliqué précédemment pour la première composante de modulation de différence de phase $\Delta\phi_{m1}(t)$, la différence de phase totale $\Delta\phi_t$ est alternativement sur son niveau haut et sur son niveau bas, jusqu'à l'instant $t = t_R$ de la retombée où elle demeure sur le même niveau bas 2204, au lieu de rejoindre le niveau haut 2205 représenté en pointillés.

On a également représenté sur la figure 22 la réponse de l'interféromètre en anneau 20, à savoir la puissance lumineuse reçue $P(\Delta\phi_t)$ 2206 par le détecteur en sortie de l'interféromètre. Cette puissance lumineuse reçue est de forme cosinusoïdale : $P(\Delta\phi_t) = P_0[1 + \cos(\Delta\phi_t)]$, et présente un maximum égal à $2P_0$ lorsque la différence de phase totale $\Delta\phi_t$ est nulle ($\Delta\phi_t = 0$).

La différence de phase totale $\Delta\phi_t$ étant modulée comme décrit précédemment, la puissance lumineuse reçue $P(\Delta\phi_t)$ 2206 par le détecteur 14 est modulée suivant 2 états de modulation distincts :

- un état E1 pour lequel $\Delta\phi_t = \Delta\phi_1 = 3\pi/4$, et
- un état E2 pour lequel $\Delta\phi_t = \Delta\phi_2 = -3\pi/4$.

Comme cela est visible sur la figure 22, la puissance lumineuse reçue $P(\Delta\phi_t)$ 2206 par le détecteur 14 dans les deux états de modulation E1 et E2 est la même. En effet, la puissance lumineuse reçue $P(\Delta\phi_t)$ 2206 étant une fonction cosinusoïdale de la différence de phase totale $\Delta\phi_t$, on a la relation : $P(\Delta\phi_1) = P(\Delta\phi_2)$.

Le détecteur 14 délivre alors un signal électrique modulé $S(t)$ 2207 tel que représenté sur la figure 22. Ce signal électrique modulé $S(t)$ 2207 prend séquentiellement 2 valeurs S1 et S2 associées respectivement aux 2 états de modulation E1 et E2 de la différence de phase totale $\Delta\phi_t$ modulée.

On remarquera également sur la figure 22 que le signal électrique modulé $S(t)$ 2207 présente des pics 2208 correspondant aux transitions de l'état E1 à l'état E2 de modulation (et *vice versa*), lorsque la puissance lumineuse reçue $P(\Delta\phi_t)$ 2206 passe par un maximum à la valeur $\Delta\phi_t = 0$, ce maximum ayant pour valeur $2P_0$.

Ces pics 2208 sont gênants dans la mesure où ils introduisent des défauts non voulues dans le signal électrique modulé $S(t)$ 2207.

Ce signal électrique modulé $S(t)$ 2207 est ensuite numérisé par le convertisseur analogique/numérique 111 qui délivre et transmet un signal électrique numérique à l'unité de traitement numérique 112.

Il est important de noter ici que la retombée de la première composante de modulation de déphasage $\phi_{m1}(t)$ à l'instant $t = t_R$ ne crée pas de défaut dans le signal électrique modulé $S(t)$ 2207 dans la mesure où la différence de phase totale $\Delta\phi_t$ ne change pas lors de cette retombée. Ainsi, la retombée ne perturbe pas la mesure.

_2ème, 3ème et 4ème modes de réalisation de l'invention_

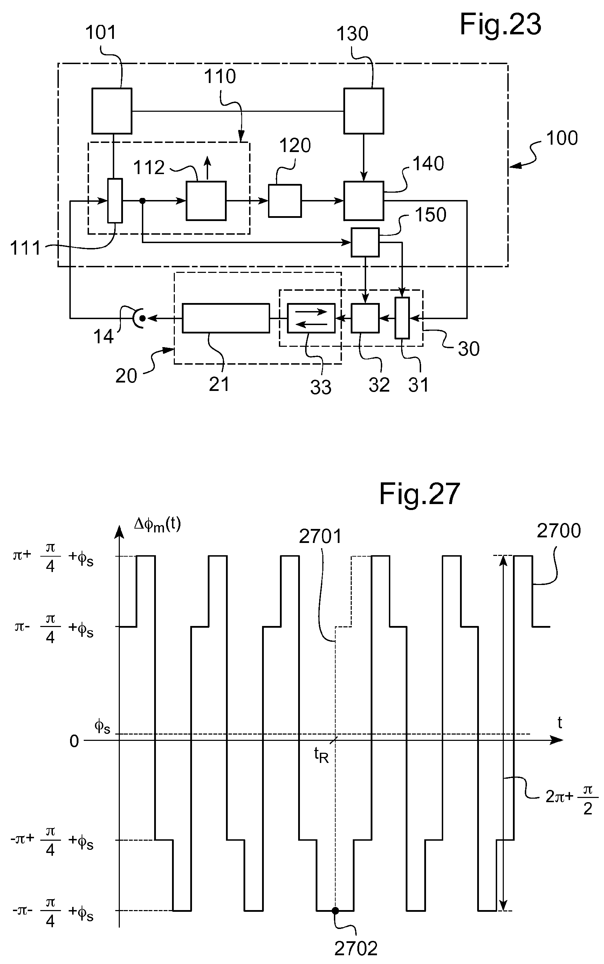

Les figures 23 à 40 sont relatives à trois modes de réalisation particuliers de l'invention dans lesquels la différence de phase totale $\Delta\phi_t$ entre les deux ondes contra-propagatives 24, 25 est modulée non plus selon 2 états de modulation, mais selon 4 états de modulation. On verra notamment comment ces modes de réalisation particuliers permettent d'asservir la chaîne de modulation 30.

En effet, avantageusement, dans ces 2ème, 3ème et 4ème modes de réalisation de l'invention, il est connu que les moyens électroniques 100 du dispositif 10 de mesure à fibre optique comportent des moyens d'asservissement de gain 150 tels que représentés sur la figure 23. Ces moyens d'asservissement de gain 150 maintiennent ajustée la fonction de transfert de la chaîne de modulation 30, cette fonction de transfert caractérisant électroniquement la chaîne de modulation 30 entre son entrée et sa sortie.

Cette fonction de transfert caractérise la réponse de la chaîne de modulation 30 : elle correspond au rapport entre la valeur (en radians) du déphasage effectivement généré par la chaîne de modulation 30 *via* le modulateur de phase 33 et la valeur (sans unité) du signal numérique de commande transmis à la chaîne de modulation 30.

Les moyens d'asservissement de gain 150 comprennent une autre unité de traitement numérique (non représentée) exploitant le signal électrique numérique délivré par le convertisseur analogique / numérique 111 de manière à fournir un signal fonction de la fonction de transfert de la chaîne de modulation 30.

Ce dernier signal est filtré par un filtre intégrateur numérique de boucle d'asservissement qui alimente un autre convertisseur numérique / analogique commandant le gain G variable de l'amplificateur 32 ou la tension analogique de référence du convertisseur numérique / analogique 31.

Ainsi, la fonction de transfert de la chaîne de modulation 30 est maintenue correctement ajustée, ainsi que la tension de commande de modulation délivrée par l'amplificateur 32 au modulateur de phase 33.

On entend par là qu'une valeur donnée du signal numérique de commande en entrée de la chaîne de modulation 30 donnera toujours la même valeur (en radians) de modulation de déphasage $\phi_m$ générée par le modulateur de phase 33, et ainsi la même valeur (en radians) de modulation de différence de phase $\Delta\phi_m$ introduite entre les deux ondes contra-propagatives 24, 25 dans l'interféromètre en anneau 20 de SAGNAC.

On comprendra à la lumière de la description qui va suivre comment fonctionnent les moyens d'asservissement 150 et comment ils permettent de maintenir correctement ajustée la fonction de transfert de la chaîne de modulation 30.

<u>2ème mode de réalisation</u>

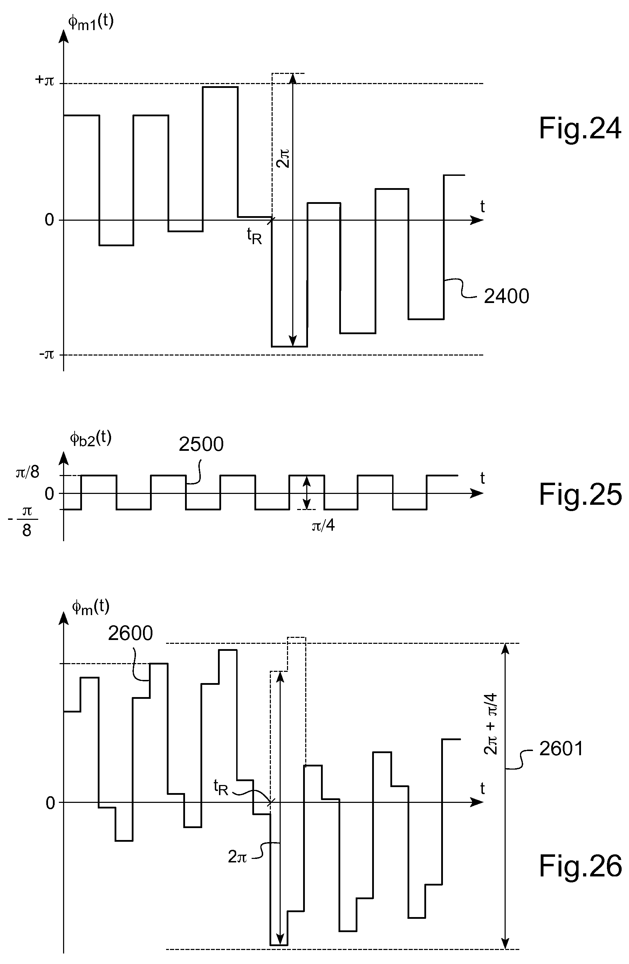

On détaillera à présent sur les figures 24 à 30, un deuxième mode de réalisation de l'invention dans lequel :

- $a_1$ = 1 et $k_1$ = 0, c'est-à-dire que la première composante de modulation de déphasage de mise au biais $\phi_{b1}(t)$ est une modulation carrée en créneaux d'amplitude $\pi$ entre un niveau haut $+\pi/2$ et un niveau bas $-\pi/2$ et périodique à une première fréquence de modulation de mise au biais $f_{b1}$ égale à la fréquence propre $f_p$ de l'interféromètre en anneau 20 de SAGNAC, et

- $\Delta\phi_p$=$-\pi/20$ si bien que la première composante de modulation de déphasage de contre-réaction $\phi_{cr1}(t)$ est une modulation en marches d'escalier montant de hauteur $\phi_s$ = $-\Delta\phi_p$ = $\pi/20$ compensant la différence de phase $\Delta\phi_p$ due au paramètre à mesurer.

Ainsi, conformément à l'invention, la première composante de modulation de déphasage $\phi_{m1}(t)$ est telle que représentée sur la figure 24. Elle a une forme de modulation en créneaux montante, qui retombe de $2\pi$ à l'instant t = $t_R$, et présente une amplitude maximale inférieure à $2\pi$.

En outre, dans ce deuxième mode de réalisation de l'invention, les moyens de mise au biais 120 génèrent un second signal de mise au biais produisant en sortie de la chaîne de modulation 30 une seconde composante de modulation de déphasage de mise au biais $\phi_{b2}(t)$ 2500, cette seconde composante de modulation de déphasage de mise au biais $\phi_{b2}(t)$ 2500 étant (cf. figure 25) :

- une modulation carrée en créneaux d'amplitude $\pi/a_2$ = $\pi/4$, avec ici $a_2$ = 4 ≠ $a_1$ = 1, entre un niveau haut $+\pi/8$ et un niveau bas $-\pi/8$,
- périodique à une seconde fréquence de modulation de mise au biais $f_{b2}$ telle que $f_{b2}$ = $(2k_2+1) f_p$ = $f_p$, avec $k_2$ = $k_1$ = 0 si bien que $(2k_1+1)$ = 1 et $(2k_2+1)$ = 1 sont multiples l'un de l'autre,
- en quadrature par rapport à la première composante de modulation de déphasage de mise au biais $\phi_{b1}(t)$.

On définira ici que la première composante de modulation de déphasage de mise au biais $\phi_{b1}(t)$ et la seconde composante de modulation de déphasage de mise au biais $\phi_{b2}(t)$ 2500 sont en quadrature lorsqu'une transition de la première composante de modulation de déphasage de mise au biais $\phi_{b1}(t)$ d'un niveau extrême à un autre intervient à égale distance de deux zéros successifs de la seconde composante de modulation de déphasage de mise au biais $\phi_{b2}(t)$ 2500.

On a représenté sur la figure 26 la modulation de déphasage $\phi_m(t)$ 2600 résultant de la somme de la première composante de modulation de déphasage $\phi_{m1}(t)$ 2400 et de la seconde composante de modulation de déphasage de mise au biais $\phi_{b2}(t)$ 2500.

On remarque sur la figure 26 que, compte tenu que la première composante de modulation de déphasage de contre-réaction $\phi_{cr1}(t)$ est une modulation ici montante, la première composante de modulation de déphasage $\phi_{m1}(t)$ 2400 retombe de $2\pi$ selon la règle précédemment décrite, à l'instant de retombée t = $t_R$. De la même manière, la modulation de déphasage $\phi_m(t)$ 2600 résultante retombe également au même instant t = $t_R$.

Comme cela est visible sur la figure 26, l'amplitude maximale 2601 de la modulation de déphasage $\phi_m(t)$ 2600 est ici égale à $2\pi + \pi/4$.

Ainsi générée par le modulateur de phase 33 de la chaîne de modulation 30, la modulation de déphasage $\phi_m(t)$ 2600 introduit entre les deux ondes contra-propagatives 24, 25 en sortie de l'interféromètre en anneau 20 de SAGNAC une modulation de différence de phase $\Delta\phi_m(t)$ = $\phi_m(t)$ - $\phi_m(t-\Delta\tau_g)$ telle que représentée sur la figure 27.

On constate que cette modulation de différence

de phase $\Delta\phi_m(t)$ 2700 oscille entre 4 niveaux différents :

- 2 niveaux hauts :

  - un premier niveau ou niveau 1 lorsque $\Delta\phi_m(t) = \pi - \pi/4 + \phi_s$
  - un deuxième niveau ou niveau 2 lorsque $\Delta\phi_m(t) = \pi + \pi/4 + \phi_s$, et

- 2 niveaux bas :

  - un troisième niveau ou niveau 3 lorsque $\Delta\phi_m(t) = -\pi + \pi/4 + \phi_s$
  - un quatrième niveau ou niveau 4 lorsque $\Delta\phi_m(t) = -\pi - \pi/4 + \phi_s$.

Comme cela est visible sur la figure 27, la modulation de différence de phase $\Delta\phi_m(t)$ 2700 est ainsi décalée vers le haut de la valeur $\phi_s = -\Delta\phi_p$ (= $\pi/20$ ici) comme vu précédemment.

On remarque par ailleurs qu'à l'instant $t = t_R$ de la retombée de la modulation de déphasage $\phi_m(t)$, la modulation de différence de phase $\Delta\phi_m(t)$ ne remonte pas (traits pointillés 2701) mais reste sur son quatrième niveau 2702 pendant une durée de marche pour remonter ensuite à l'instant $t_R + \Delta\tau_g$ vers les niveaux hauts 1 et 2, la modulation de différence de phase $\Delta\phi_m(t)$ étant symétrique par rapport à l'instant de la retombée (c'est-à-dire que $\Delta\phi_m(t_R+t) = \Delta\phi_m(t_R-t)$). L'alternance entre niveaux hauts et niveaux bas continuent alors jusqu'à la prochaine retombée.

En résumé, dans le deuxième mode de réalisation particulier de l'invention, on a vu d'un côté que le paramètre à mesurer introduisait entre les deux ondes contra-propagatives une différence de phase $\Delta\phi_p = -\pi/20$ en sortie de l'interféromètre en anneau 20 de SAGNAC. D'un autre côté, on a vu que les moyens de contre-réaction 120 généraient un premier signal de contre-réaction pour produire en sortie de la chaîne de modulation 30 une première composante de modulation de contre-réaction $\phi_{cr1}(t)$ en marches d'escalier de hauteur $\phi_s = \pi/20$ de manière à introduire entre les deux ondes contra-propagatives 24, 25 une première composante de modulation de différence de phase de contre-réaction $\Delta\phi_{cr1}(t)$ compensant la différence de phase $\Delta\phi_p$ due au paramètre à mesurer.

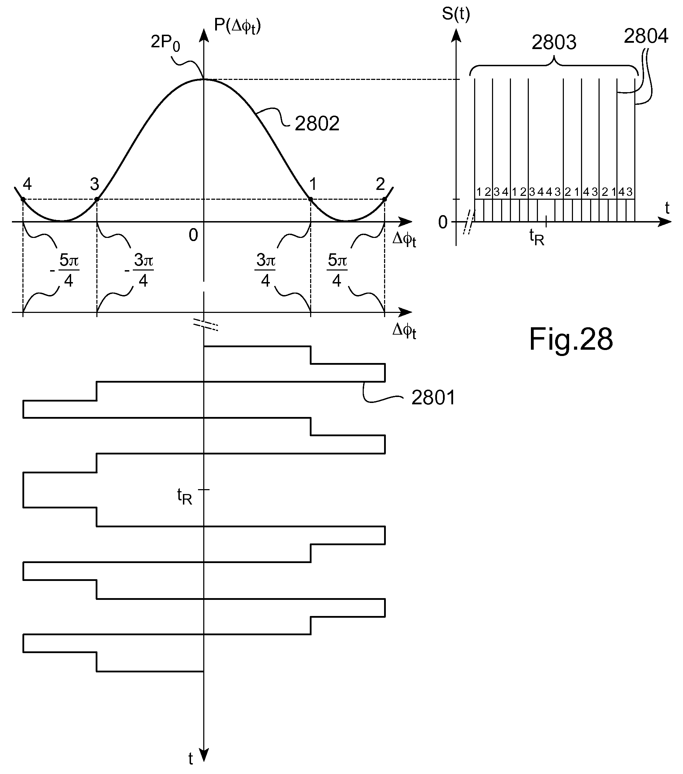

On a ainsi représenté sur la figure 28 :

- la différence de phase totale $\Delta\phi_t(t)$ 2801 entre les deux ondes contra-propagatives 24, 25 en sortie de l'interféromètre en anneau 20, cette différence de phase totale $\Delta\phi_t(t)$ étant telle que : $\Delta\phi_t(t) = \Delta\phi_p + \Delta\phi_m(t)$,
- la puissance lumineuse $P(\Delta\phi_t)$ 2802 reçue par le détecteur 14 en fonction de la différence de phase totale $\Delta\phi_t(t)$ 2801, et
- le signal électrique modulé S(t) 2803 délivré par le détecteur 14 en fonction du temps t.

Comme la différence de phase totale $\Delta\phi_t(t)$ est la somme de la différence de phase $\Delta\phi_p$ due au paramètre à mesurer et de la modulation de différence de phase $\Delta\phi_m(t)$, on remarquera tout d'abord sur la figure 28 que la courbe 2801 représentant la différence de phase totale $\Delta\phi_t(t)$ en fonction du temps t correspond à la courbe 2700 de la figure 27 représentant la modulation de différence de phase $\Delta\phi_m(t)$, cette courbe étant décalée vers l'axe des abscisses de la valeur de la différence de phase $\Delta\phi_p$ due au paramètre à mesurer.

Par conséquent, la modulation de différence de phase totale $\Delta\phi_t(t)$ 2801 présente séquentiellement quatre niveaux différents définissant 4 états de modulation différents, qui sont :

- État E1 lorsque la modulation de différence de phase totale $\Delta\phi_t(t)$ vaut $\Delta\phi_1 = \pi - \pi/4 = 3\pi/4$,
- État E2 lorsque la modulation de différence de phase totale $\Delta\phi_t(t)$ vaut $\Delta\phi_2 = \pi + \pi/4 = 5\pi/4$,
- État E3 lorsque la modulation de différence de phase totale $\Delta\phi_t(t)$ vaut $\Delta\phi_3 = -\pi + \pi/4 = -3\pi/4$ (= $\Delta\phi_2 - 2\pi$),
- État E4 lorsque la modulation de différence de phase totale $\Delta\phi_t(t)$ vaut $\Delta\phi_4 = -\pi - \pi/4 = -5\pi/4$ (= $\Delta\phi_1 - 2\pi$).

La puissance lumineuse reçue $P(\Delta\phi_t)$ 2802 par le détecteur 14 est ainsi modulée suivant ces 4 états de modulation distincts et le signal électrique modulé S(t) 2803 délivré par le détecteur 14 prend séquentiellement 4 valeurs S1, S2, S3, et S4 associées respectivement aux 4 états de modulation E1, E2, E3, et E4 de la modulation de différence de phase totale $\Delta\phi_t(t)$.

Comme cela est visible sur la figure 28, la puissance lumineuse reçue $P(\Delta\phi_t)$ 2802 par le détecteur 14 dans les 4 états de modulation E1 à E4 est la même. En effet, la puissance lumineuse reçue $P(\Delta\phi_t)$ 2802 étant une fonction cosinusoïdale de la différence de phase totale $\Delta\phi_t$ 2801, on a les relations : $P(\Delta\phi_1) = P(\Delta\phi_4)$ et $P(\Delta\phi_2) = P(\Delta\phi_3)$. De plus, les états E1 et E2 (respectivement les états E3 et E4) étant symétriques par rapport à $\pi$ (respectivement par rapport à $-\pi$), on a également les relations : $P(\Delta\phi_1) = P(\Delta\phi_2)$ et $P(\Delta\phi_3) = P(\Delta\phi_4)$.

Le détecteur 14 délivre alors un signal électrique modulé S(t) 2803 tel que représenté sur la figure 28. Ce signal électrique modulé S(t) 2803 prend séquentiellement les 4 valeurs S1, S2, S3, et S4 associées respectivement aux 4 états de modulation E1, E2, E3, et E4. Compte tenu de ce qui a été expliqué concernant la puissance lumineuse reçue $P(\Delta\phi_t)$ 2802 par le détecteur 14 dans les 4 états de modulation E1 à E4, ces 4 valeurs S1, S2, S3, et S4 prises par le signal électrique modulé S(t) 2803 sont ici toutes identiques : S1 = S2 = S3 = S4.

En particulier, comme pour le premier mode de réalisation de l'invention décrit précédemment, on notera encore que la retombée 2701 de la modulation de différence de phase $\Delta\phi_m(t)$ 2700 à l'instant $t = t_R$ (voir figure 27) ne crée pas de défaut dans le signal électrique modulé S(t) 2803 dans la mesure où la différence de phase totale $\Delta\phi_t$ 2801 ne change pas lors de cette retombée

($\Delta\phi_m$(t) restant sur son niveau bas 2702). Ainsi, la retombée ne perturbe pas la mesure.

On remarquera néanmoins sur la figure 28 que le signal électrique modulé S(t) présente des pics 2804 correspondant alternativement aux transitions de l'état E1 à l'état E4 de modulation et de l'état E3 à l'état E2 de modulation, lorsque la puissance lumineuse reçue P($\Delta\phi_t$) 2802 passe par un maximum à la valeur $\Delta\phi_t$ = 0, ce maximum ayant pour valeur 2P$_0$.

Ces pics 2804 sont gênants dans la mesure où ils introduisent des défauts non voulues dans le signal électrique modulé S(t) 2803.

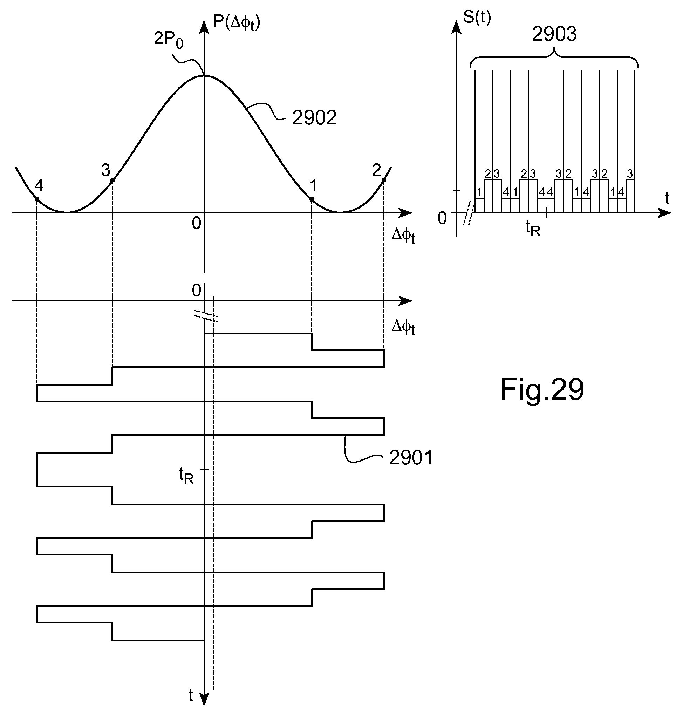

À partir de la situation précédente, décrite sur la figure 28, où le paramètre à mesurer engendre une différence de phase $\Delta\phi_p$ qui est exactement compensée grâce à la première composante de modulation de différence de phase de contre-réaction $\Delta\phi_{cr1}$(t) introduite entre les deux ondes contra-propagatives 24, 25 dans l'interféromètre en anneau 20 de SAGNAC par la première composante de modulation de déphasage de contre-réaction $\phi_{cr1}$(t) en marches d'escalier, on passe à la situation décrite sur la figure 29 où la différence de phase $\Delta\phi_p$ n'est pas exactement compensée par la première composante de modulation de différence de phase de contre-réaction $\Delta\phi_{cr1}$(t).

Cette situation peut, par exemple, se produire lorsque le paramètre à mesurer varie brusquement, de telle sorte que la différence de phase $\Delta\phi_p$ varie également brusquement. Dans ce cas, il est nécessaire d'attendre quelques temps d'horloge 101 pour revenir à la situation de la figure 27.

On considérera dans cet exemple que la différence de phase $\Delta\phi_p$ engendrée par le paramètre n'est pas exactement compensée, si bien que la différence de phase totale $\Delta\phi_t$ est augmentée de la valeur $\pi$/16.

Ceci peut être représenté sur la figure 29 en décalant la courbe 2901 représentant la différence de phase totale $\Delta\phi_t$ de la valeur $\pi$/16. Ce décalage entraîne un changement des 4 états de modulation sur lesquels est modulé le signal reçu par le détecteur 14, qui est fonction de la puissance lumineuse reçue P($\Delta\phi_t$) 2902 par celui-ci.

Les 4 niveaux de la modulation de différence de phase totale $\Delta\phi_t$ 2901 associés aux 4 états de modulation sont donc désormais :

- Pour l'état E1 :

$$\Delta\phi_t = \Delta\phi_1 + \pi/16 = 3\pi/4 + \pi/16 = 13\pi/16$$

- Pour l'état E2 :

$$\Delta\phi_t = \Delta\phi_2 + \pi/16 = 5\pi/4 + \pi/16 = 21\pi/16$$

- Pour l'état E3 :

$$\Delta\phi_t = \Delta\phi_3 + \pi/16 = -3\pi/4 + \pi/16 = -11\pi/16$$

- Pour l'état E4 :

$$\Delta\phi_t = \Delta\phi_4 + \pi/16 = -5\pi/4 + \pi/16 = -19\pi/16$$

Ainsi, comme cela est visible sur la figure 29, la puissance lumineuse reçue P($\Delta\phi_t$) 2902 par le détecteur 14 dans les états de modulation E1 et E4 est plus faible, et celle reçue dans les états de modulation E2 et E3 est plus forte.

Le détecteur 14 délivre alors un signal électrique modulé S(t) 2903 tel que représenté sur la figure 29. Ce signal électrique modulé S(t) 2903 prend séquentiellement les 4 valeurs S1, S2, S3, et S4 associées respectivement aux 4 états de modulation E1, E2, E3, et E4. Ces 4 valeurs S1, S2, S3, et S4 prises par le signal électrique modulé S(t) 2903 sont ici deux à deux identiques : S1 = S4 et S2 = S3.

Ce signal électrique modulé S(t) 2903 est ensuite numérisé par le convertisseur analogique/numérique 111 qui délivre et transmet un signal électrique numérique à l'unité de traitement numérique 112.

Ce signal électrique numérique est également modulé et prend 4 valeurs numériques $\Sigma$1, $\Sigma$2, $\Sigma$3, et $\Sigma$4 suivant les 4 états de modulations E1, E2, E3, et E4 de la modulation de différence de phase totale $\Delta\phi_t$ 2901.

L'unité de traitement numérique 112 démodule le signal électrique numérique en phase avec la seconde composante de modulation de déphasage de mise au biais $\phi_{b2}$(t) (*cf.* figure 25) indépendamment de la première composante de modulation de déphasage $\phi_{m1}$(t) (cf. figure 26).

On entend par là que l'unité de traitement numérique 112 délivre un premier signal numérique démodulé $\Sigma_p$ à partir des 4 valeurs numériques $\Sigma_1$, $\Sigma_2$, $\Sigma_3$, et $\Sigma_4$ associées respectivement aux 4 états de modulations E1, E2, E3, et E4 en effectuant une opération de calcul du type : $\Sigma_p$ = -$\Sigma$1 + $\Sigma$2 + $\Sigma$3 - $\Sigma$4 où le poids de chaque valeur numérique dans l'expression précédente dépend du signe de la seconde composante de modulation de déphasage de mise au biais $\phi_{b2}$(t), dans l'état de modulation associé à cette valeur numérique, mais ne dépend pas du niveau de la première composante de modulation de déphasage $\phi_{m1}$(t), dans cet état de modulation.

L'unité de traitement numérique 112 produit donc un premier signal numérique démodulé $\Sigma_p$ dépendant du déphasage $\Delta\phi_p$ et représentatif de la valeur du paramètre à mesurer dans l'interféromètre en anneau 20 de SAGNAC.

Dans un fonctionnement en boucle fermée, le premier signal numérique démodulé $\Sigma_p$ sert de signal d'erreur pour asservir la différence de phase totale $\Delta\phi_t$ à zéro en compensant le déphasage non réciproque $\Delta\phi_p$ avec le déphasage opposé $\Delta\phi_{cr1}$ introduit par le modulateur de phase 33 commandé par les moyens de contre-réaction 120.

Ce déphasage $\Delta\phi_{cr1}$ étant généré à travers la même chaîne de modulation 30 que la modulation de mise au biais $\phi_{b1}$, l'asservissement de la chaîne de modulation 30, dont on détaille le fonctionnement ci-après, permet donc d'avoir une mesure stable et contrôlée de $\Delta\phi_{cr1}$, et donc finalement de $\Delta\phi_p$ qui lui est opposé et qui est le paramètre que l'on cherche à mesurer.

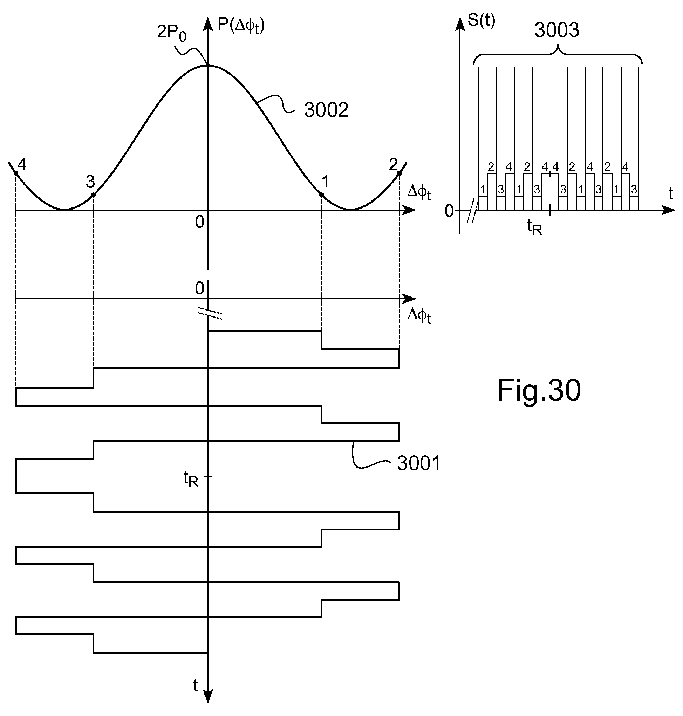

La figure 30 représente le cas d'un dispositif 10 de mesure à fibre optique selon le deuxième mode de réalisation de l'invention, dans lequel la fonction de transfert de la chaîne de modulation 30 est incorrectement ajustée.

En pratique, la fonction de transfert qui dépend des caractéristiques à la fois du convertisseur numérique/analogique 31 *via* sa tension analogique de référence et à la fois de l'amplificateur 32 *via* son gain variable G, peut subir des variations en fonction des conditions de mesure, par exemple la température de fonctionnement du dispositif 10 ou la dérive électrique de certains composants électroniques que comportent les moyens électroniques 100. Généralement, les paramètres influençant la fonction de transfert engendrent des variations faibles et lentes de celle-ci, si bien que les moyens d'asservissement de gain 150 opèrent aisément et rapidement afin de maintenir ajustée la fonction de transfert de la chaîne de modulation 30.

Le fait que la fonction de transfert de la chaîne de modulation 30 soit incorrectement ajustée se traduit au niveau de la différence de phase totale $\Delta\phi_t$ par une dilatation de la courbe de la figure 28 représentant la différence de phase totale $\Delta\phi_t$ de telle sorte que la différence de phase totale $\Delta\phi_t$ 3001 est telle que celle représentée sur la figure 30.

Ainsi, cette dilatation (ici de rapport 16/15) entraîne un changement des 4 états de modulation E1, E2, E3, et E4 sur lesquels est modulé le signal reçu par le détecteur 14, qui est fonction de la puissance lumineuse reçue $P(\Delta\phi_t)$ 3002 en sortie de l'interféromètre en anneau 20 de SAGNAC.

Les 4 niveaux de la modulation de différence de phase totale $\Delta\phi_t$ 3001 associés aux 4 états de modulations dans l'exemple de la figure 30 sont alors :

- Pour l'état E1 :

$$\Delta\phi_t = (16/15).\Delta\phi_1 = 4\pi/5$$

- Pour l'état E2 :

$$\Delta\phi_t = (16/15).\Delta\phi_2 = 4\pi/3$$

- Pour l'état E3 :

$$\Delta\phi_t = (16/15).\Delta\phi_3 = -4\pi/5$$

- Pour l'état E4 :

$$\Delta\phi_t = (16/15).\Delta\phi_4 = -4\pi/3$$

Ainsi, la puissance lumineuse reçue $P(\Delta\phi_t)$ 3002 par le détecteur 14 dans les états de modulation E1 et E3 est identique, mais plus faible que la puissance lumineuse reçue lorsque la fonction de transfert de la chaîne de modulation 30 est correctement ajustée, comme sur les figures 28 et 29.

De même, la puissance lumineuse reçue $P(\Delta\phi_t)$ 3002 par le détecteur 14 dans les états de modulation E2 et E4 est identique, mais plus forte que la puissance lumineuse reçue lorsque la fonction de transfert de la chaîne de modulation 30 est correctement ajustée, comme sur les figures 28 et 29.

Le détecteur 14 délivre alors un signal électrique modulé S(t) 3003 tel que représenté sur la figure 30. Ce signal électrique modulé S(t) 3003 prend séquentiellement 4 valeurs S1, S2, S3, et S4 associées respectivement aux 4 états de modulation E1, E2, E3, et E4. Ces 4 valeurs sont ici deux à deux identiques : S1 = S3 et S2 = S4.

Les 4 valeurs $\Sigma1$, $\Sigma2$, $\Sigma3$, et $\Sigma4$ du signal électrique numérique associées respectivement aux 4 états de modulation E1, E2, E3, et E4 étant aussi deux à deux identiques avec $\Sigma1 = \Sigma3$ et $\Sigma2 = \Sigma4$, le premier signal numérique démodulé $\Sigma_p$, calculé selon l'opération $\Sigma_p = -\Sigma1 + \Sigma2 + \Sigma3 - \Sigma4$, est donc nul.

Par ailleurs, le signal électrique numérique délivré par le convertisseur analogique / numérique 111 est transmis aux moyens d'asservissement de gain 150 tels que représentés sur la figure 23.

Les moyens d'asservissement de gain 150 démodulent le signal électrique numérique de manière à fournir un signal fonction de la fonction de transfert de la chaîne de modulation 30.

Plus précisément, l'autre unité de traitement numérique des moyens d'asservissement de gain 150 effectuent une opération de calcul du type : $\Sigma_G = \Sigma1 - \Sigma2 + \Sigma3 - \Sigma4$, afin de produire un second signal numérique démodulé $\Sigma_G$ indépendant de la différence de phase $\Delta\phi_p$ engendrée par le paramètre à mesurer mais significatif de la fonction de transfert de la chaîne de modulation 30.

En particulier, dans le cas représenté sur la figure 30, le second signal numérique démodulé $\Sigma_G$ est non nul, la fonction de transfert de la chaîne de modulation 30 étant incorrectement ajustée.

Le second signal numérique démodulé $\Sigma_G$ sert alors de signal d'erreur pour une boucle d'asservissement de la fonction de transfert de la chaîne de modulation 30.

À cet effet, le second signal numérique démo-

dulé $\Sigma_G$ est filtré par un filtre intégrateur numérique de bouche d'asservissement qui alimente ensuite le convertisseur numérique / analogique 31 pour commander sa tension analogique de référence ou l'amplificateur 32 pour commander son gain variable G.

Ainsi, la fonction de transfert de la chaîne de modulation 30 est maintenu correctement ajustée entre la valeur du signal numérique de commande et la valeur de la modulation de déphasage effectivement appliquée par le modulateur de phase 33.

On remarquera, que dans le cas des figures 28 et 29, le second signal numérique démodulé $\Sigma_G$ est nul puisque la fonction de transfert de la chaîne de modulation 30 est correctement ajustée.

En effet, dans ce cas, on a :

- $\Sigma 1 = \Sigma 4$, la puissance lumineuse reçue $P(\Delta\phi_t)$ reçue dans l'état E1 et dans l'état E4 étant la même, et
- $\Sigma 2 = \Sigma 3$, la puissance lumineuse reçue $P(\Delta\phi_t)$ reçue dans l'état E2 et dans l'état E3 étant la même.

3ème mode de réalisation

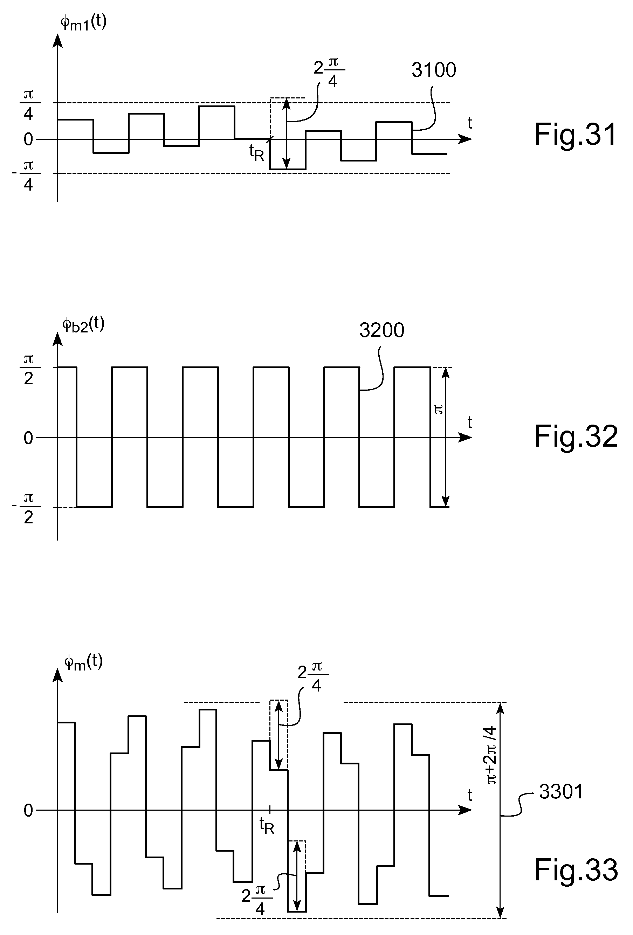

On détaillera à présent sur les figures 31 à 35, un troisième mode de réalisation de l'invention dans lequel :

- $a_1 = 4$ et $k_1 = 0$, c'est-à-dire que la première composante de modulation de déphasage de mise au biais $\phi_{b1}(t)$ est une modulation carrée en créneaux d'amplitude $\pi/4$ entre un niveau haut $+\pi/8$ et un niveau bas $-\pi/8$ et périodique à une première fréquence de modulation de mise au biais $f_{b1}$ égale à la fréquence propre $f_p$ de l'interféromètre en anneau 20 de SAGNAC, et
- $\Delta\phi_p = -\pi/40$ si bien que la première composante de modulation de déphasage de contre-réaction $\phi_{cr1}(t)$ est une modulation en marches d'escalier montant de hauteur $\phi_s = -\Delta\phi_p = \pi/40$ compensant la différence de phase $\Delta\phi_p$ due au paramètre à mesurer.

Ainsi, conformément à l'invention, la première composante de modulation de déphasage $\phi_{m1}(t)$ 3100 est telle que représentée sur la figure 31. Elle a une forme de modulation en créneaux montante, retombe de $2\pi/4$ ($=\pi/2$) à l'instant $t = t_R$, et présente une amplitude maximale inférieure à $2\pi/4$ ($=\pi/2$).

En outre, dans ce troisième mode de réalisation de l'invention, les moyens de mise au biais 120 génèrent un second signal de mise au biais produisant en sortie de la chaîne de modulation 30 une seconde composante de modulation de déphasage de mise au biais $\phi_{b2}(t)$ 3200, cette seconde composante de modulation de déphasage de mise au biais $\phi_{b2}(t)$ 3200 étant (*cf.* figure 32) :

- une modulation carrée en créneaux d'amplitude $\pi/a_2$ = $\pi$, avec ici $a_2 = 1 \neq a_1 = 4$, entre un niveau haut $+\pi/2$ et un niveau bas $-\pi/2$,

- périodique à une seconde fréquence de modulation de mise au biais $f_{b2}$ telle que $f_{b2} = (2k_2+1) f_p = f_p$, avec $k_2 = k_1 = 0$ si bien que $(2k_1+1) = 1$ et $(2k_2+1) = 1$ sont multiples l'un de l'autre,
- en quadrature par rapport à la première composante de modulation de déphasage de mise au biais $\phi_{b1}(t)$.

On a représenté sur la figure 33 la modulation de déphasage $\phi_m(t)$ 3300 résultant, pour le 3ème mode de réalisation, de la somme de la première composante de modulation de déphasage $\phi_{m1}(t)$ 3100 et de la seconde composante de modulation de déphasage de mise au biais $\phi_{b2}(t)$ 3200.

On remarque sur la figure 33 que, compte tenu que la première composante de modulation de déphasage de contre-réaction $\phi_{cr1}(t)$ est une modulation montante, la première composante de modulation de déphasage $\phi_{m1}(t)$ 3100 retombe de $2\pi/4$ selon la règle précédemment décrite, à l'instant de retombée $t = t_R$. De la même manière, la modulation de déphasage $\phi_m(t)$ 3300 résultante retombe également au même instant $t = t_R$.

Comme cela est visible sur la figure 33, l'amplitude maximale 3301 de la modulation de déphasage $\phi_m(t)$ 3300 est ici égale à $2(\pi/4) + \pi$.

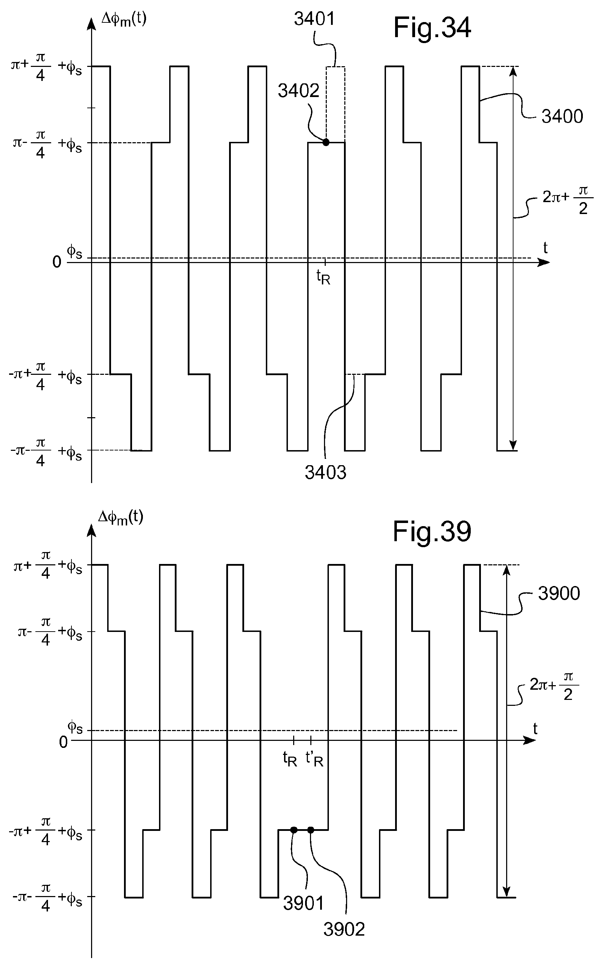

Ainsi générée par le modulateur de phase 33 de la chaîne de modulation 30, la modulation de déphasage $\phi_m(t)$ introduit entre les deux ondes contra-propagatives 24, 25 en sortie de l'interféromètre en anneau 20 de SAGNAC une modulation de différence de phase $\Delta\phi_m(t) = \phi_m(t) - \phi_m(t-\Delta\tau_g)$ telle que représentée sur la figure 34.

On constate, pour ce 3ème mode de réalisation, que cette modulation de différence de phase $\Delta\phi_m(t)$ 3400 oscille entre 4 niveaux différents :

- 2 niveaux hauts :

  - un premier niveau ou niveau 1 lorsque $\Delta\phi_m(t) = \pi - \pi/4 + \phi_s$
  - un deuxième niveau ou niveau 2 lorsque $\Delta\phi_m(t) = \pi + \pi/4 + \phi_s$, et

- 2 niveaux bas :

  - un troisième niveau ou niveau 3 lorsque $\Delta\phi_m(t) = -\pi + \pi/4 + \phi_s$
  - un quatrième niveau ou niveau 4 lorsque $\Delta\phi_m(t) = -\pi - \pi/4 + \phi_s$.

Comme cela est visible sur la figure 34, la modulation de différence de phase $\Delta\phi_m(t)$ 3400 est ainsi décalée vers le haut de la valeur $\phi_s = -\Delta\phi_p$ ($= \pi/40$ ici) comme vu précédemment.

On remarque par ailleurs qu'à l'instant $t = t_R$ de la retombée de la modulation de déphasage $\Delta\phi_m(t)$, la modulation de différence de phase $\Delta\phi_m(t)$ ne remonte pas (traits pointillés 3401) mais reste sur son premier niveau 3402 pendant une demi-durée de marche pour retomber ensuite à l'instant $t_R + (A\tau_g/2)$ vers le troisième niveau 3403, la modulation de différence de phase $\Delta\phi_m(t)$ étant symétrique par rapport à l'instant de la retombée (c'est-à-dire que $\Delta\phi_m(t_R+t) = \Delta\phi_m(t_R-t)$). L'alternance entre niveaux hauts et niveaux bas continuent alors jusqu'à la prochaine retombée.

En résumé, dans le troisième mode de réalisation particulier de l'invention, on a vu d'un côté que le paramètre à mesurer introduisait entre les deux ondes contra-propagatives une différence de phase $\Delta\phi_p = -\pi/40$ en sortie de l'interféromètre en anneau 20 de SAGNAC. D'un autre côté, on a vu que les moyens de contre-réaction 120 généraient un premier signal de contre-réaction pour produire en sortie de la chaîne de modulation 30 une première composante de modulation de déphasage de contre-réaction $\phi_{cr1}(t)$ en marches d'escalier de hauteur $\phi_s = \pi/40$ de manière à introduire entre les deux ondes contra-propagatives 24, 25 une première composante de modulation de différence de phase de contre-réaction $\Delta\phi_{cr1}(t)$ compensant la différence de phase $\Delta\phi_p$ due au paramètre à mesurer.

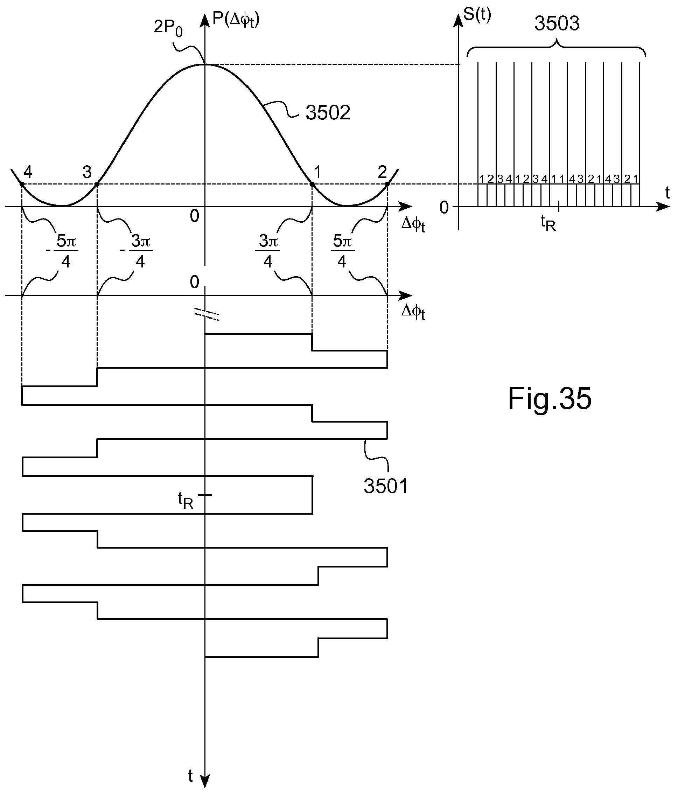

Pour le 3ème mode de réalisation de l'invention, on a ainsi représenté sur la figure 35 :

- la différence de phase totale $\Delta\phi_t(t)$ 3501 entre les deux ondes contra-propagatives 24, 25 en sortie de l'interféromètre en anneau 20, cette différence de phase totale $\Delta\phi_t(t)$ étant telle que : $\Delta\phi_t(t) = \Delta\phi_p + \Delta\phi_m(t)$,
- la puissance lumineuse $P(\Delta\phi_t)$ 3502 reçue par le détecteur 14 en fonction de la différence de phase totale $\Delta\phi_t(t)$, et
- le signal électrique modulé S(t) 3503 délivré par le détecteur 14 en fonction du temps t.

Comme la différence de phase totale $\Delta\phi_t(t)$ 3501 est la somme de la différence de phase $\Delta\phi_p$ due au paramètre à mesurer et de la modulation de différence de phase $\Delta\phi_m(t)$ 3400, on remarquera encore sur la figure 35 que la courbe 3501 représentant la différence de phase totale $\Delta\phi_t(t)$ en fonction du temps t correspond à la courbe 3400 de la figure 34 représentant la modulation de différence de phase $\Delta\phi_m(t)$, cette courbe étant décalée vers l'axe des abscisses de la valeur de la différence de phase $\Delta\phi_p$ due au paramètre à mesurer.

Par conséquent, la modulation de différence de phase totale $\Delta\phi_t(t)$ 3501 présente séquentiellement quatre niveaux différents définissant 4 états de modulation différents, qui sont :

- État E1 lorsque la modulation de différence de phase totale $\Delta\phi_t(t)$ vaut $\Delta\phi_1 = \pi - \pi/4 = 3\pi/4$,
- État E2 lorsque la modulation de différence de phase totale $\Delta\phi_t(t)$ vaut $\Delta\phi_2 = \pi + \pi/4 = 5\pi/4$,
- État E3 lorsque la modulation de différence de phase totale $\Delta\phi_t(t)$ vaut $\Delta\phi_3 = -\pi + \pi/4 = -3\pi/4$ $(= \Delta\phi_2 - 2\pi)$,
- État E4 lorsque la modulation de différence de phase totale $\Delta\phi_t(t)$ vaut $\Delta\phi_4 -\pi - \pi/4 = -5\pi/4$ $(= \Delta\phi_1 - 2\pi)$.

La puissance lumineuse reçue $P(\Delta\phi_t)$ 3502 par le détecteur 14 est ainsi modulée suivant ces 4 états de modulation distincts et le signal électrique modulé S(t) 3503 délivré par le détecteur 14 prend séquentiellement 4 valeurs S1, S2, S3, et S4 associées respectivement aux 4 états de modulation E1, E2, E3, et E4 de la modulation de différence de phase totale $\Delta\phi_t(t)$ 3501.

Comme cela est visible sur la figure 28, la puissance lumineuse reçue $P(\Delta\phi_t)$ 3502 par le détecteur 14 dans les 4 états de modulation E1 à E4 est la même. En effet, la puissance lumineuse reçue $P(\Delta\phi_t)$ 3502 étant une fonction cosinusoïdale de la différence de phase totale $\Delta\phi_t$ 3501, on a les relations : $P(\Delta\phi_1) = P(\Delta\phi_4)$ et $P(\Delta\phi_2) = P(\Delta\phi_3)$. De plus, les états E1 et E2 (respectivement les états E3 et E4) étant symétriques par rapport à $\pi$ (respectivement par rapport à $-\pi$), on a également les relations : $P(\Delta\phi_1) = P(\Delta\phi_2)$ et $P(\Delta\phi_\phi) = P(\Delta\phi_4)$.

Le détecteur 14 délivre alors un signal électrique modulé S(t) 3503 tel que représenté sur la figure 35. Ce signal électrique modulé S(t) 3503 prend séquentiellement les 4 valeurs S1, S2, S3, et S4 associées respectivement aux 4 états de modulation E1, E2, E3, et E4. Compte tenu de ce qui a été expliqué concernant la puissance lumineuse reçue $P(\Delta\phi_t)$ 3502 par le détecteur 14 dans les 4 états de modulation E1 à E4, ces 4 valeurs S1, S2, S3, et S4 prises par le signal électrique modulé S(t) 3503 sont ici toutes identiques : S1 = S2 = S3 =S4.

Comme précédemment, on remarquera que la retombée de la modulation de différence de phase $\Delta\phi_m(t)$ 3400 à l'instant $t = t_R$ (voir figure 34) ne crée pas de défaut dans le signal électrique modulé S(t) 3503 de la figure 35 dans la mesure où la différence de phase totale $\Delta\phi_t$ 3501 ne change pas lors de cette retombée ($\Delta\phi_m(t)$ restant sur son niveau haut 3402). Ainsi, la retombée ne perturbe pas la mesure.

4ème mode de réalisation

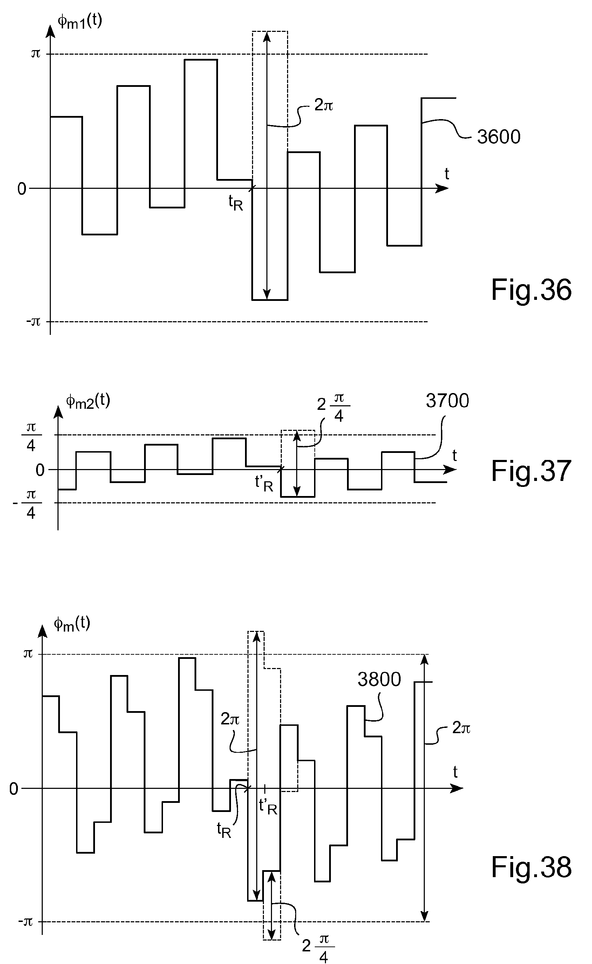

On détaillera à présent sur les figures 36 à 40, un quatrième mode de réalisation de l'invention dans lequel :

- $a_1 = 1$ et $k_1 = 0$, c'est-à-dire que la première composante de modulation de déphasage de mise au biais $\phi_{b1}(t)$ est une modulation carrée en créneaux d'amplitude $\pi$ entre un niveau haut $+\pi/2$ et un niveau bas $-\pi/2$ et périodique à une première fréquence de modulation de mise au biais $f_{b1}$ égale à la fréquence propre $f_p$ de l'interféromètre en anneau 20 de SAGNAC, et
- $\Delta\phi_p = -3\pi/40$ si bien que la première composante de modulation de déphasage de contre-réaction $\phi_{cr1}(t)$ est une modulation en marches d'escalier montant de hauteur $\phi_{s1} =[a_2/(a_2-1)] (-\Delta\phi_p) = \pi/10$ avec $a_2 = 4 \neq a_1 = 1$.

Ainsi, dans ce quatrième mode de réalisation de l'invention, la première composante de modulation de

déphasage $\phi_{m1}(t)$ 3600 est telle que représentée sur la figure 36. Elle a une forme de modulation en créneaux montante, retombe de $2\pi$ à l'instant $t = t_R$, et présente une amplitude maximale inférieure à $2\pi$.

En outre, dans ce quatrième mode de réalisation de l'invention, les moyens de mise au biais 120 génèrent un second signal de mise au biais produisant en sortie de la chaîne de modulation 30 une seconde composante de modulation de déphasage de mise au biais $\phi_{b2}(t)$, cette seconde composante de modulation de déphasage de mise au biais $\phi_{b2}(t)$ étant :

- une modulation carrée en créneaux d'amplitude $\pi/a_2$ = $\pi/4$ (donc $a_2$ = 4, comme décrit précédemment) entre un niveau haut $+\pi/8$ et un niveau bas $-\pi/8$,
- périodique à une seconde fréquence de modulation de mise au biais $f_{b2}$ telle que $f_{b2} = f_{b1} = (2k_1+1) f_p = f_p$, car ici $k_1 = 0$ (voir ci-dessus),
- en quadrature retard par rapport à la première composante de modulation de déphasage de mise au biais $\phi_{b1}(t)$.

On définira ici que la seconde composante de modulation de déphasage de mise au biais $\phi_{b2}(t)$ est en quadrature *retard* par rapport à la première composante de modulation de déphasage de mise au biais $\phi_{b1}(t)$ lorsqu'une transition de la première composante de modulation de déphasage de mise au biais $\phi_{b1}(t)$ d'un niveau haut à un niveau bas intervient lorsque la seconde composante de modulation de déphasage de mise au biais $\phi_{b2}(t)$ est sur un niveau haut. Par symétrie, une transition de la première composante de modulation de déphasage de mise au biais $\phi_{b1}(t)$ d'un niveau bas à un niveau haut intervient lorsque la seconde composante de modulation de déphasage de mise au biais $\phi_{b2}(t)$ est sur un niveau bas.

Dans ce quatrième mode de réalisation de l'invention, les moyens de contre-réaction 120 génèrent un seconde signal de contre-réaction, produisant en sortie de la chaîne de modulation une seconde composante de modulation de déphasage de contre-réaction $\phi_{cr2}(t)$ qui est une modulation :

- en marches d'escalier, chaque marche ayant une durée $\Delta\tau_g$ et une hauteur $\phi_{s2} = [1/(a_2-1)] (-\Delta\phi_p) = (1/3).(3\pi/40) = \pi/40$,
- en quadrature retard par rapport à la première composante de modulation de déphasage de contre-réaction $\phi_{cr1}(t)$.

Ainsi générée, la seconde composante de modulation de déphasage de contre-réaction $\phi_{cr2}(t)$ introduit une seconde composante de modulation de différence de phase de contre-réaction $\Delta\phi_{cr2}(t) = \phi_{cr2}(t) - \phi_{cr2}(t-\Delta\tau_g)$ entre les deux ondes contra-propagatives 24, 25 se propageant dans l'interféromètre en anneau 20 de SAGNAC.

Les hauteurs $\phi_{s1}$ et $\phi_{s2}$ de la première et de la seconde composantes de modulation de déphasage de contre-réaction $\phi_{cr1}(t)$ et $\phi_{cr2}(t)$ sont telles que la différence entre la première composante de modulation de différence de phase de contre-réaction $\Delta\phi_{cr1}(t)$ et la seconde composante de modulation de différence de phase de contre-réaction $\Delta\phi_{cr2}(t)$ compense ladite différence de phase $\Delta\phi_p$.

En effet, la modulation de différence de phase de contre-réaction $\Delta\phi_{cr}(t)$ définie comme la différence entre la première composante de modulation de différence de phase de contre-réaction $\Delta\phi_{cr1}(t)$ et la seconde composante de modulation de différence de phase de contre-réaction $\Delta\phi_{cr2}(t)$ est une modulation en marches d'escalier, chaque marche ayant une hauteur $\phi_s = \phi_{s1} - \phi_{s2} = \pi/10 - \pi/40 = 3\pi/40 = -\Delta\phi_p$.

Par ailleurs, dans ce quatrième mode de réalisation, les moyens de commande 140 de la chaîne de modulation 30 traitent le second signal de mise au biais et le second signal de contre-réaction pour délivrer au moins un second signal de commande en entrée de la chaîne de modulation 30.

Ce second signal de commande produit alors en sortie de la chaîne de modulation 30 une seconde composante de modulation de déphasage $\phi_{m2}(t)$ qui est la somme de la seconde composante de modulation de déphasage de mise au biais $\phi_{b2}(t)$ et de la seconde composante de modulation de déphasage de contre-réaction $\phi_{cr2}(t)$, si bien que : $\phi_{m2}(t) = \phi_{b2}(t) + \phi_{cr2}(t)$.

En outre, selon ce quatrième mode de réalisation, les moyens de commande 140 sont agencés pour que la seconde composante de modulation de déphasage $\phi_{m2}(t)$ opère une transition de deux fois l'amplitude de la seconde composante de modulation de déphasage de mise au biais $\phi_{b2}(t)$, soit ici $2\pi/a_2 = 2\pi/4 = \pi/2$ (avec $a_2 = 4$), lorsque son niveau dépasse l'amplitude de la seconde composante de modulation de déphasage de mise au biais $\phi_{b2}(t)$, soit $\pi/a_2 = \pi/4$.

On a ainsi représenté sur la figure 37 la courbe représentant cette seconde composante de modulation de déphasage $\phi_{m2}(t)$ 3700. Étant formée de manière analogue à la première composante de modulation de déphasage $\phi_{m1}(t)$ 3600, la seconde composante de modulation de déphasage $\phi_{m2}(t)$ 3700 est également une modulation en créneaux, ici montante. Cette modulation retombe à l'instant $t = t'_R = t_R + \Delta\tau_g/2$, $\phi_{m2}(t)$ étant en quadrature retard par rapport à $\phi_{m1}(t)$.

Mathématiquement, la relation qui lie la première composante de modulation de déphasage $\phi_{m1}(t)$ 3600 à la seconde composante de modulation de déphasage $\phi_{m2}(t)$ 3700 est ici la suivante : $\phi_{m2}(t) = (1/a_2).\phi_{m1}(t-\Delta\tau_g//2)$.

De manière générale, dans ce quatrième mode de réalisation, lorsque :

- la première composante de modulation de déphasage $\phi_{m1}(t)$ est une modulation en créneaux dont la largeur de chaque créneau est égale à $\Delta\tau_g/(2k_1+1)$, la première composante de modulation de déphasage de mise au biais $\phi_{b1}(t)$ étant une modulation périodique à une première fréquence de modulation de mise au biais $f_{b1}$ telle que $f_{b1} = (2k_1+1) f_p$ ($f_p = 1/2\Delta\tau_g$ étant la fréquence propre de l'interféromètre en anneau 20), et

- la seconde composante de modulation de déphasage $\phi_{m2}(t)$ est une modulation en créneaux dont la largeur de chaque créneau est égale à $\Delta\tau_g/(2k_1+1)$, la seconde composante de modulation de déphasage de mise au biais $\phi_{b1}(t)$ étant une modulation périodique à une seconde fréquence de modulation de mise au biais $f_{b2}$ telle que $f_{b2} = f_{b1} = (2k_1+1) f_p$,

la relation mathématique qui lie la première composante de modulation de déphasage $\phi_{m1}(t)$ à la seconde composante de modulation de déphasage $\phi_{m2}(t)$ est alors la suivante :

$$\phi_{m2}(t) = (1/a_2).\phi_{m1}(t-[\Delta\tau_g/2(2k_1+1)]).$$

On définit alors une modulation de déphasage $\phi_m(t)$ comme la différence entre la première composante de modulation de déphasage $\phi_{m1}(t)$ et la seconde composante de modulation de déphasage $\phi_{m2}(t)$ de telle sorte que $\phi_m(t) = \phi_{m1}(t) - \phi_{m2}(t)$.

On a ainsi représenté sur la figure 38 la modulation de déphasage $\phi_m(t)$ 3800 résultante pour ce 4ème mode de réalisation.

On remarque que sur cette figure que la modulation de déphasage $\phi_m(t)$ 3800 est une modulation « 4 états » montante, présentant :

- une retombée à l'instant $t = t_R$ de la retombée de la première composante de modulation de déphasage $\phi_{m1}(t)$ 3600, cette retombée ayant la même amplitude, à savoir $2\pi$, et
- une remontée à l'instant $t = t'_R = t_R + \Delta\tau_g/2$ de la retombée de la seconde composante de modulation de déphasage $\phi_{m2}(t)$ 3700, cette remontée ayant la même amplitude que la retombée, à savoir $2\pi/4$.

La modulation de déphasage $\phi_m(t)$ 3800 opère une remontée à l'instant $t = t'_R$ plutôt qu'une retombée comme la seconde composante de modulation de déphasage $\phi_{m2}(t)$ 3700 parce que la contribution de la seconde composante de modulation de déphasage $\phi_{m2}(t)$ 3700 est ajoutée négativement à la modulation de déphasage $\phi_m(t)$ 3800, étant égale à $\phi_{m1}(t) - \phi_{m2}(t)$.

Ainsi formée, la modulation de déphasage $\phi_m(t)$ 3800 présente une amplitude maximale strictement inférieure à $2\pi$, comme on peut le vérifier sur la figure 38. L'excursion de la chaîne de modulation est donc limitée et les effets des non-linéarités de celle-ci sont réduits.

Ainsi générée par le modulateur de phase 33 de la chaîne de modulation 30, la modulation de déphasage $\phi_m(t)$ 3800 introduit entre les deux ondes contra-propagatives 24, 25 en sortie de l'interféromètre en anneau 20 de SAGNAC une modulation de différence de phase $\Delta\phi_m(t) = \phi_m(t) - \phi_m(t-\Delta\tau_g)$ telle que représentée sur la figure 39.

On constate, pour ce 4ème mode de réalisation, que cette modulation de différence de phase $\Delta\phi_m(t)$ 3900 oscille également entre 4 niveaux différents :

- 2 niveaux hauts :

  - un premier niveau lorsque $\Delta\phi_m(t) = \pi - \pi/4 + \phi_s$
  - un deuxième niveau lorsque $\Delta\phi_m(t) = \pi + \pi/4 + \phi_s$, et

- 2 niveaux bas :

  - un troisième niveau lorsque $\Delta\phi_m(t) = -\pi + \pi/4 + \phi_s$
  - un quatrième niveau lorsque $\Delta\phi_m(t) = -\pi - \pi/4 + \phi_s$.

Comme cela est visible sur la figure 39, la modulation de différence de phase $\Delta\phi_m(t)$ 3900 est ainsi décalée vers le haut de la valeur $\phi_s = -\Delta\phi_p$ (= $3\pi/40$ ici) comme vu précédemment. De plus, son amplitude est ici égale à $2\pi + 2(\pi/4) = 2\pi + \pi/2$.

On remarque par ailleurs qu'à l'instant $t = t_R$ de la retombée de la modulation de déphasage $\phi_m(t)$ 3800, la modulation de différence de phase $\Delta\phi_m(t)$ 3900 ne remonte pas mais reste sur son troisième niveau 3901 pendant une demi-durée $\Delta\tau_g/2$ de marche. Ensuite, à l'instant $t = t'_R = t_R + \Delta\tau_g/2$ de la retombée de la seconde composante de modulation de déphasage $\phi_{m2}(t)$, la modulation de différence de phase $\Delta\phi_m(t)$ demeure toujours sur le troisième niveau 3902 pendant une demi-durée $\Delta\tau_g/2$ de marche.

La modulation de différence de phase $\Delta\phi_m(t)$ remonte ensuite vers les niveaux pour reprendre ses alternances entre niveaux hauts et niveaux bas jusqu'à la prochaine transition.

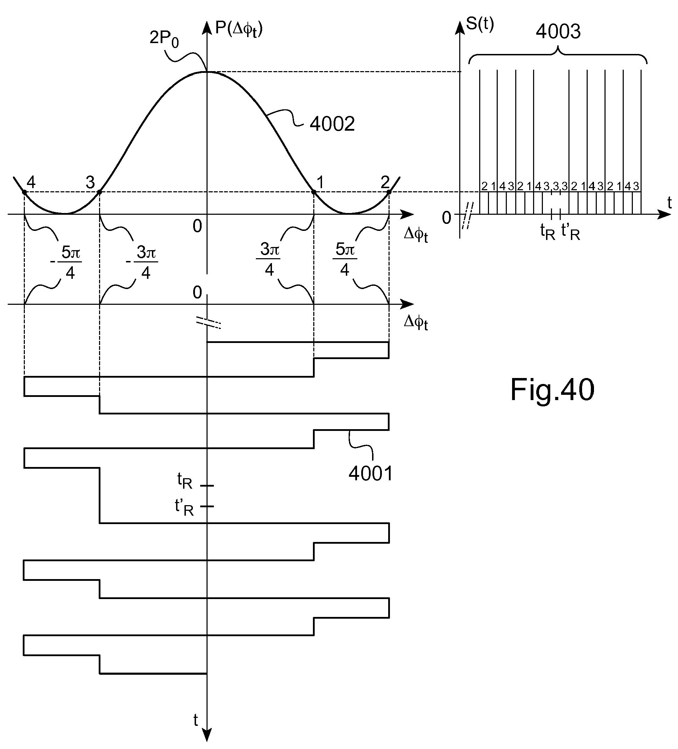

Pour le 4ème mode de réalisation de l'invention, on a enfin représenté sur la figure 40 :

- la différence de phase totale $\Delta\phi_t(t)$ 4001 entre les deux ondes contra-propagatives 24, 25 en sortie de l'interféromètre en anneau 20, cette différence de phase totale $\Delta\phi_t(t)$ 4001 étant telle que : $\Delta\phi_t(t) = \Delta\phi_p + \Delta\phi_m(t)$,
- la puissance lumineuse $P(\Delta\phi_t)$ 4002 reçue par le détecteur 14 en fonction de la différence de phase totale $\Delta\phi_t(t)$ 4001, et
- le signal électrique modulé $S(t)$ 4003 délivré par le détecteur 14 en fonction du temps $t$.

Comme précédemment, on remarquera que ni la retombée à l'instant $t = t_R$, ni la remontée à l'instant $t = t'_R$ de la modulation de différence de phase $\Delta\phi_m(t)$ 3900 (voir figure 39) ne crée de défaut dans le signal électrique modulé S(t) 4003 de la figure 40 dans la mesure où la différence de phase totale $\Delta\phi_t$ 4001 ne change pas lors de cette retombée ou de cette remontée ($\Delta\phi_m(t)$ restant sur son troisième niveau 3901 et 3902). Ainsi, ni la retombée, ni la remontée ne perturbent la mesure.

Le dispositif de mesure de l'invention est particulièrement bien adapté à la réalisation d'un gyromètre. Dans ce cas, le paramètre à mesurer est une composante de la vitesse de rotation de l'interféromètre en anneau 20.

Ce gyromètre entre ainsi avantageusement dans la réalisation de centrales de navigation ou de stabilisation inertielle.

Une telle disposition est également bien adaptée à la réalisation d'un dispositif de mesure de champ magnétique et de courant électrique en mettant à profit l'effet FARADAY.

## Revendications

1. Dispositif de mesure (10) à fibre optique du type dans lequel un paramètre à mesurer engendre une différence de phase $\Delta\phi_p$ entre deux ondes contra-propagatives (24, 25), comportant :

    - une source lumineuse (11),
    - un interféromètre en anneau (20) de SAGNAC à fibre optique, de préférence monomode, comportant une bobine (21) et un élément séparateur (23), dans lequel se propagent lesdites deux ondes contra-propagatives (24, 25), ledit interféromètre en anneau (20) ayant une fréquence propre $f_p$,
    - un détecteur (14) de rayonnement électromagnétique, recevant la puissance lumineuse sortant dudit interféromètre en anneau (20) et délivrant un signal électrique modulé représentatif de la puissance lumineuse, qui est fonction de la différence de phase totale $\Delta\phi_t$ entre lesdites deux ondes contra-propagatives (24, 25) à la sortie dudit interféromètre en anneau (20),
    - une chaîne de modulation (30) apte à moduler ladite puissance lumineuse sortant dudit interféromètre en anneau (20), ladite chaîne de modulation (30) comportant au moins un modulateur de phase (33) placé dans ledit interféromètre en anneau (20) et apte à générer en sortie de ladite chaîne de modulation (30) une modulation de déphasage $\Delta\phi_m(t)$, introduisant entre lesdites deux ondes contra-propagatives une modulation de différence de phase $\Delta\phi_m(t)$ telle que : $\Delta\phi_m(t) = \phi_m(t) - \phi_m(t-\Delta\tau_g)$, $\Delta\tau_g = 1/(2 f_p)$ étant la différence de temps de transit entre lesdites deux ondes contra-propagatives (24, 25) déterminée entre ledit modulateur de phase (33) et ledit élément séparateur (23), et
    - des moyens de traitement du signal (110) comportant :

        - un convertisseur analogique / numérique (111) numérisant ledit signal électrique modulé reçu du détecteur (14) et représentatif de ladite puissance lumineuse reçue par ledit détecteur (14) pour délivrer un signal électrique numérique, et
        - une unité de traitement numérique (112) apte à traiter ledit signal électrique numérique pour délivrer un signal fonction de ladite différence de phase $\Delta\phi_p$ et dudit paramètre à mesurer,

    - des moyens de mise au biais (130) adaptés à générer un premier signal de mise au biais produisant en sortie de la chaîne de modulation (30) une première composante de modulation de déphasage de mise au biais $\phi_{b1}(t)$ en créneaux carrés d'amplitude $\pi/a_1$, $a_1$ étant un nombre réel non nul, périodique à une première fréquence de modulation de mise au biais $f_{b1}$ telle que $f_{b1} = (2k_1+1) f_P$, $k_1$ étant un entier naturel et $f_p$ étant la fréquence propre,
    - des moyens de contre-réaction (120) adaptés à traiter ledit signal fonction de ladite différence de phase $\Delta\phi_p$ pour générer un premier signal de contre-réaction, produisant en sortie de la chaîne de modulation (30) une première composante de modulation de déphasage de contre-réaction $\phi_{cr1}(t)$ en marches d'escalier, chaque marche ayant une durée $\Delta\tau_g/(2k_1+1)$, ladite première composante de modulation de déphasage de contre-réaction $\Delta\phi_{cr1}(t)$ introduisant entre lesdites deux ondes contra-propagatives (24, 25) une première composante de modulation de différence de phase de contre-réaction $\Delta\phi_{cr1}(t) = \phi_{cr1}(t) - \phi_{cr1}(t-\Delta\tau_g)$ fonction de ladite différence de phase $\Delta\phi_p$,
    - des moyens de commande (140) de ladite chaîne de modulation (30) adaptés à traiter ledit premier signal de mise au biais et ledit premier signal de contre-réaction pour délivrer au moins un premier signal de commande en entrée de ladite chaîne de modulation (30), produisant en sortie de la chaîne de modulation (30) une première composante de modulation de déphasage $\phi_{m1}t)$ qui est la somme de ladite première composante de modulation de déphasage de mise au biais $\phi_{b1}t)$ et de ladite première composante de modulation de déphasage de contre-réaction $\phi_{cr1}(t)$, telle que

$$\phi_{m1}(t) = \phi_{b1}(t) + \phi_{cr1}(t),$$

ledit dispositif de mesure (10) à fibre optique étant **caractérisé en ce que** les moyens de commande (140) de ladite chaîne de modulation (30) sont agencés pour que ladite première composante de modulation de déphasage $\phi_{m1}(t)$ opère une transition de deux fois l'amplitude de la première composante de modulation de déphasage de mise au biais $\phi_{b1}(t)$, soit $2\pi/a_1$, lorsque son niveau dépasse l'amplitude de la première composante de modulation de déphasage de mise au biais $\phi_{b1}(t)$, soit $\pi/a_1$.

2. Dispositif de mesure (10) à fibre optique selon la revendication 1, dans lequel ladite première composante de modulation de déphasage de contre-réaction $\phi_{cr1}(t)$ présente des marches d'escalier de hauteur $-\Delta\phi_p/(2k1+1)$, de telle sorte que ladite première composante de modulation de différence de phase de contre-réaction $\Delta\phi_{cr1}(t)$ soit telle que $\Delta\phi_{cr1}(t) = -\Delta\phi_p$, pour compenser ladite différence de phase $\Delta\phi_p$ due au paramètre à mesurer.

3. Dispositif de mesure (10) à fibre optique selon la revendication 2, dans lequel les moyens de mise au biais (130) sont adaptés à générer un second signal de mise au biais produisant en sortie de la chaîne de modulation (30) une seconde composante de modulation de déphasage de mise au biais $\phi_{b2}(t)$, ladite seconde composante de modulation de déphasage de mise au biais $\phi_{b2}(t)$ étant :

   - une modulation en créneaux carrés d'amplitude de $\pi/a_2$, $a_2$ étant un nombre réel non nul différent de $a_1$,
   - périodique à une seconde fréquence de modulation de mise au biais $f_{b2}$ telle que $f_{b2} = (2k_2+1)\, f_p$, $k_2$ étant un entier naturel tel que $(2k_1+1)$ et $(2k_2+1)$ soient multiples l'un de l'autre, et $f_p$ étant la fréquence propre,
   - en quadrature par rapport à la première composante de modulation de déphasage de mise au biais $\phi_{b1}(t)$.

4. Dispositif de mesure (10) à fibre optique selon la revendication 3, dans lequel $a_1 = 1$.

5. Dispositif de mesure (10) à fibre optique selon la revendication 3, dans lequel $a_2 = 1$.

6. Dispositif de mesure (10) à fibre optique selon l'une des revendications 3 à 5, comprenant également des moyens d'asservissement de gain (150) de ladite chaîne de modulation (30) permettant de maintenir ajustée la fonction de transfert de ladite chaîne de modulation (30).

7. Dispositif de mesure (10) à fibre optique selon la revendication 1, dans lequel :

   - $a_1 = 1$,
   - ladite première composante de modulation de déphasage de contre-réaction $\phi_{cr1}(t)$ présente des marches d'escalier de hauteur $[a_2/(a_2-1)]$ $[-\Delta\phi_p/(2k_1+1)]$, $a_2$ étant un nombre réel strictement supérieur à $a_1 = 1$,
   - lesdits moyens de mise au biais (130) sont adaptés à générer un second signal de mise au biais produisant en sortie de la chaîne de modulation (30) une seconde composante de modulation de déphasage de mise au biais $\phi_{b2}(t)$, ladite seconde composante de modulation de déphasage de mise au biais $\phi_{b2}(t)$ étant :

      - une modulation carrée en créneaux d'amplitude $\pi/a_2$,
      - périodique à une seconde fréquence de modulation de mise au biais $f_{b2}$ telle que $f_{b2} = f_{b1} = (2k_1+1)\, f_p$, $f_{b1}$ étant la première fréquence de modulation de mise au biais et $f_p$ étant la fréquence propre, et
      - en quadrature retard par rapport à la première composante de modulation de déphasage de mise au biais $\phi_{b1}(t)$,

   - lesdits moyens de contre-réaction (120) sont adaptés à générer un second signal de contre-réaction, produisant en sortie de la chaîne de modulation une seconde composante de modulation de déphasage de contre-réaction $\phi_{cr2}(t)$, ladite seconde composante de modulation de déphasage de contre-réaction $\phi_{cr2}(t)$ étant :

      - en marches d'escalier, chaque marche ayant une durée $\Delta\tau_g/(2k_1+1)$ et une hauteur $[1/(a_2-1)]\,[-\Delta\phi_p/(2k_1+1)]$,
      - en quadrature retard par rapport à la première composante de modulation de déphasage de contre-réaction $\phi_{cr1}(t)$, et
      - ladite seconde composante de modulation de déphasage de contre-réaction $\phi_{cr2}(t)$ introduisant une seconde composante de modulation de différence de phase de contre-réaction $\Delta\phi_{cr2}(t) = \phi_{cr2}(t) - \phi_{cr2}(t-\Delta\tau_g)$ entre lesdites deux ondes contra-propagatives (24, 25), de telle sorte que la différence entre la première composante de modulation de différence de phase de contre-réaction $\Delta\phi_{cr1}(t)$ et la seconde composante de modulation de différence de phase de contre-réaction $\Delta\phi_{cr2}(t)$ compense ladite différence de phase $\Delta\phi_p$, soit $\Delta\phi_{cr1}(t) - \Delta\phi_{cr2}(t) = -\Delta\phi_p$,

   - lesdits moyens de commande (140) de ladite chaîne de modulation (30) sont adaptés à traiter ledit second signal de mise au biais et ledit second signal de contre-réaction pour délivrer au moins un second signal de commande en entrée de ladite chaîne de modulation (30), produisant en sortie de la chaîne de modulation (30) une seconde composante de modulation de déphasage $\phi_{m2}(t)$ qui est la somme de ladite seconde composante de modulation de déphasage de mise au biais $\phi_{b2}(t)$ et de ladite seconde composante de modulation de déphasage de contre-réaction $\phi_{cr2}(t)$, de sorte que $\phi_{m2}(t) = \phi_{b2}(t) + \phi_{cr2}(t)$, et

- les moyens de commande (140) sont agencés pour que ladite seconde composante de modulation de déphasage $\phi_{m2}(t)$ opère une transition de deux fois l'amplitude de la seconde composante de modulation de déphasage de mise au biais $\phi_{b2}(t)$, soit $2\pi/a_2$, lorsque son niveau dépasse l'amplitude de la seconde composante de modulation de déphasage de mise au biais $\phi_{b2}(t)$, soit $\pi/a_2$, la modulation de déphasage $\phi_m(t)$ étant égale à la différence entre la première composante de modulation de déphasage $\phi_{m1}(t)$ et la seconde composante de modulation de déphasage $\phi_{m2}(t)$, de sorte que $\phi_m(t) = \phi_{m1}(t) - \phi_{m2}(t)$.

8. Dispositif de mesure (10) à fibre optique selon l'une des revendications 3 à 7, dans lequel $k_2 = 0$.

9. Dispositif de mesure (10) à fibre optique selon l'une des revendications 1 à 8, dans lequel $k_1 = 0$.

10. Gyromètre **caractérisé en ce qu'**il est conforme au dispositif de mesure (10) à fibre optique de l'une des revendications 1 à 9, le paramètre à mesurer étant une composante de la vitesse de rotation de l'interféromètre en anneau (20).

11. Centrale de navigation ou de stabilisation inertielle comportant au moins un gyromètre selon la revendication 10.

**Patentansprüche**

1. Faseroptische Meßvorrichtung (10) des Typs, in dem ein zu messender Parameter eine Phasendifferenz $\Delta\Phi_p$ zwischen zwei sich gegenläufig ausbreitenden Wellen (24, 25) erzeugt, mit:

- einer Lichtquelle (11),
- einem vorzugsweise monomodalen faseroptischen SAGNAC-Ringinterferometer (20), das eine Spule (21) und ein Trennelement (23) aufweist und in dem sich die beiden sich gegenläufig ausbreitenden Wellen (24, 25) ausbreiten, wobei das besagte Ringinterferometer (20) eine Eigenfrequenz $f_p$ hat,
- einem Sensor (14) für elektromagnetische Strahlung, der die aus dem Ringinterferometer (20) austretende Lichtleistung aufnimmt und ein für die Lichtleistung repräsentatives moduliertes elektrisches Signal liefert, das von der gesamten Phasendifferenz $\Delta\Phi_t$ zwischen den beiden sich gegenläufig ausbreitenden Wellen (24, 25) am Ausgang des Ringinterferometers (20) abhängt,
- einer Modulationskette (30), die geeignet ist, die aus dem Ringinterferometer (20) austretende Lichtleistung zu modulieren, wobei die Modulationskette (30) wenigstens einen im Ringinterferometer (20) angeordneten Phasenmodulator (33) aufweist, der geeignet ist, am Ausgang der Modulationskette (30) eine Phasenverschiebungsmodulation $\Phi_m(t)$ zu erzeugen, die zwischen den beiden sich gegenläufig ausbreitenden Wellen eine Phasendifferenzmodulation $\Delta\Phi_m(t)$ dergestalt einführt, daß $\Delta\Phi_m(t) = \Phi_m(t) - \Phi_m(t-\Delta\tau_g)$, wobei $\Delta\tau_g = 1/(2f_p)$ der zwischen dem Phasenmodulator (33) und dem Trennelement (23) bestimmte Unterschied zwischen den Durchlaufzeiten der beiden sich gegenläufig ausbreitenden Wellen (24, 25) ist, und
- Mitteln (110) zur Verarbeitung des Signals, die

- einen Analog/Digital-Wandler (111), der das vom Sensor (14) empfangene und für die vom Sensor (14) empfangene besagte Lichtleistung repräsentative modulierte elektrische Signal digitalisiert, um ein digitales elektrisches Signal bereit zu stellen, und
- eine Einheit (112) zur digitalen Verarbeitung, die geeignet ist, das digitale elektrische Signal zu verarbeiten, um ein Signal in Abhängigkeit von der Phasendifferenz $\Delta\Phi_p$ und dem zu messenden Parameter bereit zu stellen,

aufweisen,

- Mitteln (130) zum Einstellen einer gewollten Phasenverschiebung, die geeignet sind, ein erstes Signal zum Erzeugen einer gewollten Phasenverschiebung zu erzeugen, das am Ausgang der Modulationskette (30) eine erste Komponente der Phasenverschiebungsmodulation zum Erzeugen einer gewollten Phasenverschiebung $\Phi_{b1}(t)$ aus Quadraten der Amplitude $\pi/a_1$ ergibt, wobei $a_1$ eine von Null verschiedene, bei einer ersten Frequenz der Modulation zum Erzeugen einer gewollten Phasenverschiebung $f_{b1}$ periodische reelle Zahl mit $f_{b1} = (2k_1 + 1) f_p$ ist, wobei $k_1$ eine natürliche ganze Zahl ist und $f_p$ die Eigenfrequenz ist,
- Gegenreaktionsmitteln (120), die geeignet sind, das von der Phasendifferenz $\Delta\Phi_p$ abhängige Signal zu verarbeiten, um ein erstes Gegenreaktionssignal zu erzeugen, das am Ausgang der Modulationskette (30) eine treppenstufenförmige erste Komponente der Modulation der Gegenreaktionsphasenverschiebung $\Delta\Phi_{cr1}(t)$ ergibt, wobei jede Stufe eine Zeitdauer $\Delta\tau_g / (2k_1 +1)$ hat, wobei die erste Komponente der Modulation der Gegenreaktionsphasenverschiebung $\Delta\Phi_{cr1}(t)$ zwischen den beiden sich gegenläufig ausbreitenden Wellen (24, 25) eine erste Komponente der Modulation der Gegenreaktionsphasendifferenz $\Delta\Phi_{cr1}(t) = \Delta\Phi_{cr1}(t) - \Delta\Phi_{cr1}(t- \Delta\tau_g)$ in Abhängigkeit von der Phasendifferenz $\Delta\Phi_p$ einführt,

- Mitteln (140) zum Steuern der Modulationskette (30), die geeignet sind, das erste Signal zum Erzeugen einer gewollten Phasenverschiebung und das erste Gegenreaktionssignal zu verarbeiten, um am Eingang der Modulationskette (30) wenigstens ein erstes Steuersignal bereit zu stellen, durch das sich am Ausgang der Modulationskette (30) eine erste Komponente der Modulation der Phasenverschiebung $\Phi_{m1}(t)$ ergibt, die die Summe aus der ersten Komponente der Phasenverschiebungsmodulation zum Erzeugen einer gewollten Phasenverschiebung $\Phi_{b1}(t)$ und der ersten Komponente der Modulation der Gegenreaktionsphasenverschiebung

$$\Phi_{cr1}(t), \text{ d.h. } \Phi_{m1}(t) = \Phi_{b1}(t) + \Phi_{cr1}(t),$$

ist, wobei die faseroptische Meßvorrichtung (10) **dadurch gekennzeichnet ist, daß** die Mittel (140) zum Steuern der Modulationskette (30) derart ausgelegt sind, daß die erste Komponente der Modulation der Phasenverschiebung $\Phi_{m1}(t)$ eine Wandlung mit der zweifachen Amplitude der ersten Komponente der Phasenverschiebungsmodulation zum Erzeugen einer gewollten Phasenverschiebung $\Phi_{b1}(t)$, d.h. $2\pi/a_1$ durchführt, wenn deren Niveau die Amplitude der ersten Komponente der Phasenverschiebungsmodulation zum Erzeugen einer gewollten Phasenverschiebung $\Phi_{b1}(t)$, d.h. $\pi/a_1$ übersteigt.

2. Faseroptische Meßvorrichtung (10) gemäß Anspruch 1, bei der die besagte erste Komponente der Modulation der Gegenreaktionsphasenverschiebung $\Phi_{cr1}(t)$ Treppenstufen der Höhe $- \Delta\Phi_p / (2k_1 + 1)$ aufweist, so daß die erste Komponente der Modulation der Gegenreaktionsphasendifferenz $\Delta\Phi_{cr1})(t)$ derart ist, daß $\Delta\Phi_{cr1}(t) = - \Delta\Phi_p$ ist, um die durch den zu messenden Parameter bedingte Phasendifferenz $\Delta\Phi_p$ zu kompensieren.

3. Faseroptische Meßvorrichtung (10) gemäß Anspruch 2, bei der die Mittel (130) zum Einstellen einer gewollten Phasenverschiebung dazu ausgelegt sind, ein zweites Signal zum Erzeugen einer gewollten Phasenverschiebung zu erzeugen, das am Ausgang der Modulationskette (30) eine zweite Komponente der Phasenverschiebungsmodulation zum Erzeugen einer gewollten Phasenverschiebung $\Phi_{b2}(t)$ ergibt, wobei die zweite Komponente der Phasenverschiebungsmodulation zum Erzeugen einer gewollten Phasenverschiebung $\Phi_{b2}(t)$

- eine Modulation aus Quadraten der Amplitude $\pi/a_2$ ist, wobei $a_2$ eine von Null und von $a_1$ verschiedene reelle Zahl ist,
- die bei einer zweiten Frequenz der Modulation zum Erzeugen einer gewollten Phasenverschiebung $f_{b2}$ mit $f_{b2} = (2k_2 + 1) f_p$ periodisch ist, wobei $k_2$ eine natürliche ganze Zahl derart ist, daß $(2k_1 + 1)$ und $(2k_2 + 1)$ Vielfache voneinander sind, und $f_p$ die Eigenfrequenz ist,
- in Quadratur in Bezug auf die erste Komponente der Phasenverschiebungsmodulation zum Erzeugen einer gewollten Phasenverschiebung $\Phi_{b1}(t)$ ist.

4. Faseroptische Meßvorrichtung (10) gemäß Anspruch 3, bei der $a_1 = 1$ ist.

5. Faseroptische Meßvorrichtung (10) gemäß Anspruch 1, bei der $a_2 = 1$ ist.

6. Faseroptische Meßvorrichtung (10) gemäß einem der Ansprüche 3 bis 5, die außerdem Mittel (150) zum Steuern der Verstärkung der Modulationskette (30) aufweist, die ermöglichen, die Transferfunktion der Modulationskette (30) eingestellt zu halten.

7. Faseroptische Meßvorrichtung (10) gemäß Anspruch 1, bei der

- $a_1 = 1$ ist,
- die Komponente der Modulation der Gegenreaktionsphasenverschiebung $\Phi_{cr1}(t)$ Treppenstufen der Höhe $[a_2/a_2-1)] [- \Delta\Phi_p /(2k_1 + 1)]$ aufweist, wobei $a_2$ eine reelle Zahl ist, sie strikt größer als $a_1 = 1$ ist,
- die Mittel (130) zum Einstellen einer gewollten Phasenverschiebung so ausgelegt sind, daß sie ein zweites Signal zum Erzeugen einer gewollten Phasenverschiebung erzeugen, das am Ausgang der Modulationskette (30) eine zweite Komponente der Phasenverschiebungsmodulation zum Erzeugen einer gewollten Phasenverschiebung $\Phi_{b2}(t)$ ergibt, wobei die zweite Komponente der Phasenverschiebungsmodulation zum Erzeugen einer gewollten Phasenverschiebung $\Phi_{b2}(t)$

- eine Modulation aus Quadraten der Amplitude $\pi/a_2$ ist,
- die bei einer zweiten Frequenz der Modulation zum Erzeugen einer gewollten Phasenverschiebung $f_{b2}$ mit $f_{b2} = f_{b1} = (2k_1 + 1) f_p$ periodisch ist, wobei $f_{b1}$ die erste Frequenz der Modulation zum Erzeugen einer gewollten Phasenverschiebung ist und $f_p$ die Eigenfrequenz ist, und
- in Verzögerungsquadratur in Bezug auf die erste Komponente der Phasenverschiebungsmodulation zum Erzeugen einer gewollten Phasenverschiebung $\Phi_{b1}(t)$ ist,

- die Gegenreaktionsmittel (120) dazu ausgelegt sind, ein zweites Gegenreaktionssignal zu erzeugen, das am Ausgang der Modulationskette eine zweite Komponente der Modulation der Gegenreaktionsphasenverschiebung $\Phi_{cr2}(t)$ ergibt, wobei die zweite Komponente der Modulation der Gegenrealctionsphasenverschiebung $\Phi_{cr2}(t)$

- treppenstufenförmig ist, wobei jede Stufe eine Zeitdauer $\Delta\tau_g / (2k_1 + 1)$ und eine Höhe $[1/(a_2{-}1)]\,[-\Delta\Phi_p/\,(2k_1 + 1)]$ aufweist,
- in Verzögerungsquadratur in Bezug auf die erste Komponente der Phasenverschiebungsmodulation zum Erzeugen einer gewollten Phasenverschiebung $\Phi_{b1}(t)$ ist, und
- die besagte zweite Komponente der Modulation der Gegenreaktionsphasenverschiebung $\Phi_{cr2}(t)$ zwischen den beiden sich gegenläufig ausbreitenden Wellen (24, 25) eine zweite Komponente der Modulation der Gegenreaktionsphasendifferenz $\Delta\Phi_{cr2}(t) = \Phi_{cr2}(t) - \Phi_{cr2}(t{-}\Delta\tau_g)$ einführt, so daß die Differenz zwischen der ersten Komponente der Modulation der Gegenreaktionsphasendifferenz $\Delta\Phi_{cr1}(t)$ und der zweiten Komponente der Modulation der Gegenreaktionsphasendifferenz $\Delta\Phi_{cr2}(t)$ die Gegenreaktionsphasendifferenz $\Delta\Phi_p$ kompensiert, d.h. daß $\Delta\Phi_{cr1}(t) - \Delta\Phi_{cr2}t) = -\Delta\Phi_p$ ist,

- die Mittel (140) zum Steuern der Modulationskette dazu ausgelegt sind, das zweite Signal zum Erzeugen einer gewollten Phasenverschiebung und das zweite Gegenreaktionssignal zu verarbeiten, um am Eingang der Modulationskette (30) wenigstens ein zweites Steuersignal bereit zu stellen, das am Ausgang der Modulationskette (30) eine zweite Komponente der Modulation der Phasenverschiebung $\Phi_{m2}(t)$ ergibt, die die Summe aus der zweiten Komponente der Phasenverschiebungsmodulation zum Erzeugen einer gewollten Phasenverschiebung $\Phi_{b2}(t)$ und der zweiten Komponente der Modulation der Gegenreaktionsphasenverschiebung $\Phi_{cr2}(t)$, d.h. $\Phi_{m2}(t) = \Phi_{b2}(t) + \Phi_{cr2}(t)$, ist, und
- die Steuermittel (140) derart ausgelegt sind, daß die zweite Komponente der Modulation der Phasenverschiebung $\Phi_{m2}(t)$ eine Wandlung mit der zweifachen Amplitude der zweiten Komponente der Phasenverschiebungsmodulation zum Erzeugen einer gewollten Phasenverschiebung $\Phi_{b2}(t)$, d.h. $2\pi/a_2$ durchführt, wenn deren Niveau die Amplitude der zweiten Komponente der Phasenverschiebungsmodulation zum Erzeugen einer gewollten Phasenverschiebung $\Phi_{b2}(t)$, d.h. $\pi/a_2$ übersteigt, wobei die Phasenverschiebungsmodulation $\Phi_m(t)$ gleich der Differenz zwischen der ersten Komponente der Phasenverschiebungsmodulation $\Phi_{m1}(t)$ und der zweiten Komponente der Phasenverschiebungsmodulation $\Phi_{m2}(t)$ derart ist, daß $\Phi_m(t) = \Phi_{m1}(t) - \Phi_{m2}(t)$ ist.

**8.** Faseroptische Meßvorrichtung (10) gemäß einem der Ansprüche 3 bis 7, bei dem $k_2 = 0$ ist.

**9.** Faseroptische Meßvorrichtung (10) gemäß einem der Ansprüche 1 bis 8, bei dem $k_1 = 0$ ist.

**10.** Kreisel **dadurch gekennzeichnet, daß** er der faseroptischen Meßvorrichtung (10) gemäß einem der Ansprüche 1 bis 9 entspricht, wobei der zu messenden Parameter eine Komponente der Drehgeschwindigkeit des Ringinterferometers (20) ist.

**11.** Navigations- oder Trägheitsstabilisierungseinheit, die wenigstens einen Kreisel gemäß Anspruch 10 aufweist.

## Claims

**1.** A fibre-optic measurement device (10) of the type in which a parameter to be measured generates a phase difference $\Delta\phi_p$ between two counter-propagating waves (24, 25), including:

- a light source (11),
- a fiber-optic SAGNAC ring interferometer (20), preferably single-mode, including a coil (21) and a splitting element (23), in which said two counter-propagating waves (24, 25) propagate, said ring interferometer (20) having a proper frequency $f_p$,
- an electromagnetic radiation detector (14), receiving the luminous power exiting from said ring interferometer (20) and delivering a modulated electrical signal representative of the luminous power, which is function of the total phase difference $\Delta\phi_t$ between said two counter-propagating waves (24, 25) at the output of said ring interferometer (20),
- a modulation chain (30) adapted to modulate said luminous power exiting from said ring interferometer (20), said modulation chain (30) including at least one phase modulator (33) placed in said ring interferometer (20) and adapted to generate at the output of said modulation chain (30) a phase-shift modulation $\phi_m(t)$, introducing between said two counter-propagating waves a phase-difference modulation $\Delta\phi_m(t)$ such that: $\Delta\phi_m(t) = \phi_m(t) - \phi_m(t-\Delta\tau_g)$, $\Delta\tau_g = 1/(2 f_p)$ being the transit time difference between said two counter-propagating waves (24, 25) determined between said phase modulator (33) and said splitting element (23), and
- signal processing means (110) including:

  - an analog / digital converter (111) digitizing said modulated electrical signal received from the detector (14) and representative of said luminous power received by said detector (14) to deliver a digital electrical signal, and
  - a digital processing unit (112) adapted to process said digital electrical signal to deliver a signal function of said phase difference $\Delta\phi_p$ and of said parameter to be measured,

- biasing means (130) adapted to generate a first biasing signal producing at the output of the modulation chain (30) a first, square pulse-wave, biasing phase-shift modulation component $\phi_{b1}(t)$ of amplitude $\pi/a_1$, $a_1$ being a non-zero real number, periodic at a first biasing modulation frequency $f_{b1}$ such that $f_{b1} = (2k_1+1) f_p$, $k_1$ being a natural number and $f_p$ being the proper frequency,
- feedback means (120) adapted to process said signal function of said phase difference $\Delta\phi_p$ to generate a first feedback signal, producing at the output of the modulation chain (30) a first, stair-step, feedback phase-shift modulation component $\phi_{cr1}(t)$, each step having a duration $\Delta\tau_g/(2k_1+1)$, said first feedback phase-shift modulation component $\phi_{cr1}(t)$ introducing between said two counter-propagation waves (24, 25) a first feedback phase-difference modulation component $\Delta\phi_{cr1}(t) = \phi_{cr1}(t) - \phi_{cr1}(t-\Delta\tau_g)$ that is function of said phase difference $\Delta\phi_p$,
- control means (140) for controlling said modulation chain (30), adapted to process said first biasing signal and said first feedback signal to deliver at least one first control signal at the input of said modulation chain (30), producing at the output of the modulation chain (30) a first phase-shift modulation component $\phi_{m1}(t)$ that is the phase sum of said first biasing phase-shift modulation component $\phi_{b1}(t)$ and of said first feedback phase-shift modulation component $\phi_{cr1}(t)$, such that $\phi_{m1}(t) = \phi_{b1}(t) + \phi_{cr1}(t)$,

said fibre-optic measurement device (10) being **characterized in that** the control means (140) for controlling said modulation chain (30) are arranged so that said first phase-shift modulation component $\phi_{m1}(t)$ operates a transition of twice the amplitude of the first biasing phase-shift modulation component $\phi_{b1}(t)$, i.e. $2\pi/a_1$, when its level exceeds the amplitude of the first biasing phase-shift modulation component $\phi_{b1}(t)$, i.e. $\pi/a_1$.

2. The fibre-optic measurement device (10) according to claim 1, wherein said first feedback phase-shift modulation component $\phi_{cr1}(t)$ has stair steps of height $-\Delta\phi_p/(2k_1+1)$, such that said first feedback phase-difference modulation component $\Delta\phi_{cr1}(t)$ is such that $\Delta\phi_{cr1}(t) = -\Delta\phi_p$, to compensate for said phase difference $\Delta\phi_p$ due to the parameter to be measured.

3. The fibre-optic measurement device (10) according to claim 2, wherein said biasing means (130) are adapted to generate a second biasing signal producing at the output of the modulation chain (30) a second component of biasing phase-shift modulation $\phi_{b2}(t)$, said second biasing phase-shift modulation component $\phi_{b2}(t)$ being:

  - a square pulse-wave modulation of amplitude $\pi/a_2$, $a_2$ being a non-zero real number different from $a_1$,
  - periodic at a second biasing modulation frequency $f_{b2}$ such that $f_{b2} = (2k_2+1) f_p$, $k_2$ being a natural number such that $(2k_1+1)$ and $(2k_2+1)$ are multiples of each other, and $f_p$ being the proper frequency,
  - in quadrature relative to the first biasing phase-shift modulation component $\phi_{b1}(t)$.

4. The fibre-optic measurement device (10) according to claim 3, wherein $a_1 = 1$.

5. The fibre-optic measurement device (10) according to claim 3, wherein $a_2 = 1$.

6. The fibre-optic measurement device (10) according to one of claims 3 to 5, also comprising means (150) for controlling the gain of said modulation chain (30) allowing to keep adjusted the transfer function of said modulation chain (30).

7. The fibre-optic measurement device (10) according to claim 1, wherein

- $a_1=1$,
- said first feedback phase-shift modulation component $\phi_{cr1}(t)$ has stair steps of height $[a_2/(a_2-1)] [-\Delta\phi_p/(2k_1+1)]$, $a_2$ being a real number strictly higher than $a_1 = 1$,
- said biasing means (130) are adapted to generate a second biasing signal producing at the output of the modulation chain (30) a second biasing phase-shift modulation component $\phi_{b2}(t)$, said second biasing phase-shift modulation component $\phi_{b2}(t)$ being:

  - a square pulse-wave modulation of amplitude $\pi/a_2$,
  - periodic at a second biasing modulation frequency $f_{b2}$ such that $f_{b2} = f_{b1} =(2k_1+1) f_p$, $f_{b1}$ being the first biasing modulation frequency and $f_p$ being the proper frequency, and
  - in lagging quadrature relative to the first biasing phase-shift modulation component $\phi_{b1}(t)$,

- said feedback means (120) are adapted to generate a second feedback signal, producing at the output of the modulation chain a second feedback phase-shift modulation component $\phi_{cr2}(t)$, said second feedback phase-shift modulation component $\phi_{cr2}(t)$ being:

  - a stair-step modulation, each step having a duration $\Delta\tau_g/(2k_1+1)$ and a height $[1/(a_2-1)] [-\Delta\phi_p/(2k_1+1)]$,
  - in lagging quadrature relative to the first feedback phase-shift modulation component $\phi_{cr1}(t)$, and
  - said second feedback phase-shift modulation component $\phi_{cr2}(t)$ introducing a second feedback phase-difference modulation component $\Delta\phi_{cr2}(t) = \phi_{cr2}(t) - \phi_{cr2}(t-\Delta\tau_g)$ between said two counter-propagating waves (24, 25), such that the difference between the first feedback phase-difference modulation component $\Delta\phi_{cr1}(t)$ and the second feedback phase-difference modulation component $\Delta\phi_{cr2}(t)$ compensates for the phase difference $\Delta\phi_p$, i.e. $\Delta\phi_{cr1}(t) - \Delta\phi_{cr2}(t)= -\Delta\phi_p$,

- said control means (140) for controlling said modulation chain (30) are adapted to process said second biasing signal and said second feedback signal to deliver at least one second control signal at the input of said modulation chain (30), producing at the output of the modulation chain (30) a second phase-shift modulation component $\phi_{m2}(t)$ that is the sum of said second biasing phase-shift modulation component $\phi_{b2}(t)$ and said second feedback phase-shift modulation component $\phi_{cr2}(t)$, so that $\phi_{m2}(t) = \phi_{b2}(t) + \phi_{cr2}(t)$, and
- the control means (140) are arranged so that said second phase-shift modulation component $\phi_{m2}(t)$ operates a transition of twice the amplitude of the second biasing phase-shift modulation component $\phi_{b2}(t)$, i.e. $2\pi/a_2$, when its level exceeds the amplitude of the second biasing phase-shift modulation component $\phi_{b2}(t)$, i.e. $\pi/a_2$, the phase-shift modulation $\phi_m(t)$ being equal to the difference between the first phase-shift modulation component $\phi_{m1}(t)$ and the second phase-shift modulation component $\phi_{m2}(t)$, so that $\phi_m(t) = \phi_{m1}(t) - \phi_{m2}(t)$.

8. The fibre-optic measurement device (10) according to one of claims 3 to 7, wherein $k_2 = 0$.

9. The fibre-optic measurement device (10) according to one of claims 1 to 8, wherein $k_1 =0$.

10. A gyrometer **characterized in that** it is compliant with the fiber-optical measurement device (10) according to one of claims 1 to 9, the parameter to be measured being a component of the rotational speed of the ring interferometer (20).

11. A navigation or inertial-stabilization system including at least one gyrometer according to claim 10.

$\phi_{cr0}$

Fig.1
ART ANTERIEUR

$\phi_{b0}$

Fig.2
ART ANTERIEUR

$\pi/2a_0$

0

$-\pi/2a_0$

t

$\phi_{m0}$

Fig.3
ART ANTERIEUR

0

t

Fig.4
ART ANTERIEUR

Fig.5
ART ANTERIEUR

Fig.7
ART ANTERIEUR

Fig.6
ART ANTERIEUR

Fig.8
ART ANTERIEUR

Fig.9
ART ANTERIEUR

Fig.11
ART ANTERIEUR

Fig.10
ART ANTERIEUR

Fig.12
ART ANTERIEUR

# Fig.13
## ART ANTERIEUR

# Fig.14

Fig.15

Fig.16

Fig.17

## Fig.18

## Fig.19

Fig.20

Fig.21

Fig.22

# Fig.23

# Fig.27

Fig.24

Fig.25

Fig.26

Fig.28

Fig.29

Fig.30

Fig.31

Fig.32

Fig.33

Fig.34

Fig.39

Fig.35

Fig.36

Fig.37

Fig.38

Fig.40

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0430747 A